# EUROPEAN PATENT APPLICATION

(11) **EP 4 443 983 A1**
(43) Date of publication of application: **09.10.2024**
(21) Application number: 21965939.8
(22) Date of filing: 30.11.2021
(51) Int. Cl.: H04W 52/02

(54) **INFORMATION ACQUISITION METHOD AND APPARATUS, DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN)
(74) Representative: Penza, Giancarlo
(86) International application number: PCT/CN2021/134605
(87) International publication number: WO 2023/097502

(57) **Abstract**

The present application provides an information acquisition method and apparatus, a device, and a storage medium. The method comprises: a network device sends a first signal to a terminal device, the first signal being different from those of a second signal sent by the network device to the terminal device in respect of at least one of a modulation mode, an encoding mode, a multi-access mode, or a waveform, and the first signal carrying at least one type of information. According to the solution, the terminal device does not need to periodically activate a receiver to detect the second signal, and the first signal can be directly read to acquire the information carried by the first signal, such that the energy-saving effect of the terminal device is further improved.

## Description

### TECHNICAL FIELD

The disclosure relate to the technical field of communication, and more particularly to an information acquisition method, an apparatus, a device and a storage medium.

### BACKGROUND

In order to reduce power consumption of a User Equipment (UE), a Discontinuous Reception (DRX) mechanism is introduced in the Long Term Evolution (LTE) system and the 5G New Radio (NR) system. The DRX mechanism allows the UE to enter a discontinuous reception state without having to keep a receiver on all the time when there is no data to receive, thereby achieving the purpose of power saving.

In the process of evolution of 5G, higher requirements are put forward for power saving of the UE. For example, for an existing DRX mechanism, the UE needs to constantly detect the Physical Downlink Control Channel (PDCCH) within each on duration. However, for most UEs, there may be no need to receive data transmission for a long time, but a regular wake-up mechanism may still need to be maintained to monitor possible downlink transmission. For such UEs, the power saving may be further optimized. In this regard, a power saving signal is introduced into the standard, and the power saving signal is used in combination with the DRX mechanism. The UE may determine whether it is necessary to monitor the PDCCH within the DRX on duration by receiving the power saving signal, that is, the power saving signal indicates whether to monitor the PDCCH within the DRX on duration.

The existing power saving signal is carried based on the PDCCH, and the UE needs to turn on the receiver periodically to detect the power saving signal. Although it saves more power than directly detecting the PDCCH for data scheduling, the power consumption of detecting the power saving signal is still relatively high, and the power saving effect needs to be further improved.

### SUMMARY

Embodiments of the present disclosure provide an information acquisition method, an apparatus, a device and a storage medium, which further improve the power saving effect of the UE.

In a first aspect, an embodiment of the present disclosure provides an information acquisition method, which includes the following operations. A UE receives a first signal from a network device. The first signal is different from a second signal from the network device in at least one of a waveform, a multiple access scheme, a modulation scheme or a coding scheme, and the first signal carries at least one type of information.

In a second aspect, an embodiment of the present disclosure provides an information acquisition method, which includes the following operations. A network device transmits a first signal to a UE. The first signal is different from a second signal transmitted by the network device to the UE in at least one of a waveform, a multiple access scheme, a modulation scheme or a coding scheme, and the first signal carries at least one type of information.

In a third aspect, an embodiment of the present disclosure provides a UE, which includes a receiving module. The receiving module is configured to receive a first signal from a network device. The first signal is different from a second signal from the network device in at least one of a waveform, a multiple access scheme, a modulation scheme or a coding scheme, and the first signal carries at least one type of information.

In a fourth aspect, an embodiment of the present disclosure provides a network device, which includes a transmitting module. The transmitting module is configured to transmit a first signal to a UE. The first signal is different from a second signal transmitted by the transmitting module to the UE in at least one of a waveform, a multiple access scheme, a modulation scheme or a coding scheme, and the first signal carries at least one type of information.

In a fifth aspect, an embodiment of the present disclosure provides a UE, which includes a transceiver, a processor and a memory. The memory is configured to store computer-executable instructions. The processor is configured to execute the computer-executable instructions stored on the memory to perform the method as described in the first aspect.

Optionally, the transceiver includes a first receiver and a second receiver. The first receiver is configured to receive a first signal from a network device, and the second receiver is configured to receive a second signal from the network device. The first signal is different from the second signal in at least one of a waveform, a multiple access scheme, a modulation scheme or a coding scheme.

Optionally, the transceiver includes a first transmitter and a second transmitter. The first transmitter is configured to transmit a first feedback signal to a network device, and the second transmitter is configured to transmit a second feedback signal to the network device. The first feedback signal is different from the second feedback signal in at least one of the waveform, the multiple access scheme, the modulation scheme or the coding scheme.

In a sixth aspect, an embodiment of the present disclosure provides a network device, which includes a transceiver, a processor and a memory. The memory is configured to store computer-executable instructions. The processor is configured to execute the computer-executable instructions stored on the memory to perform the method as described in the second aspect.

Optionally, the transceiver includes a first transmitter and a second transmitter. The first transmitter is configured to transmit a first signal to a UE, and the second transmitter is configured to transmit a second signal to the UE. The first signal is different from the second signal in at least one of a waveform, a multiple access scheme, a modulation scheme or a coding scheme.

Optionally, the transceiver includes a first receiver and a second receiver. The first receiver is configured to receive a first feedback signal from a UE, and the second receiver is configured to receive a second feedback signal from the UE. The first feedback signal is different from the second feedback signal in at least one of the waveform, the multiple access scheme, the modulation scheme or the coding scheme.

In a seventh aspect, an embodiment of the present disclosure provides a computer storage medium. The computer storage medium is configured to store a computer program that, when running on a computer, causes the computer to perform the method as described in the first aspect.

In an eighth aspect, an embodiment of the present disclosure provides a computer storage medium. The computer storage medium is configured to store a computer program that, when running on a computer, causes the computer to perform the method as described in the second aspect.

In a ninth aspect, an embodiment of the present disclosure provides a computer program product. The computer program product, when running on a computer, causes the computer to perform the method as described in the first aspect.

In a tenth aspect, an embodiment of the present disclosure provides a computer program product. The computer program product, when running on a computer, causes the computer to perform the method as described in the second aspect.

Embodiments of the present disclosure provide an information acquisition method, an apparatus, a device and a storage medium. The method includes the following operations. A network device transmits a first signal to a UE. The first signal is different from a second signal transmitted by the network device to the UE in at least one of a waveform, a multiple access scheme, a modulation scheme or a coding scheme, and the first signal carries at least one type of information. According to the above solution, the UE can directly read the first signal to obtain the information carried by the first signal without periodically turning on the receiver to detect the second signal, thereby further improving the power saving effect of the UE.

### BRIEF DESCRIPTION OF THE DRAWINGS

FIG. 1 is a first functional diagram of a power saving signal provided by an embodiment of the present disclosure.
FIG. 2 is a diagram of a power saving signal carrying multi-user power saving indication information provided by an embodiment of the present disclosure.
FIG. 3 is a second functional diagram of a power saving signal provided by an embodiment of the present disclosure.
FIG. 4 is a diagram of a zero-power communication system provided by an embodiment of the present disclosure.
FIG. 5 is a diagram of back scattering communication provided by an embodiment of the present disclosure.
FIG. 6 a diagram of power harvesting provided by an embodiment of the present disclosure.
FIG. 7 is a diagram of a resistive load modulation circuit provided by an embodiment of the present disclosure.
FIG. 8 is a first scenario diagram of an information acquisition method provided by an embodiment of the present disclosure.
FIG. 9 is a second scenario diagram of an information acquisition method provided by an embodiment of the present disclosure.
FIG. 10 is a first flowchart of an information acquisition method provided by an embodiment of the present disclosure.
FIG. 11 is a second flowchart of an information acquisition method provided by an embodiment of the present disclosure.
FIG. 12 is a third flowchart of an information acquisition method provided by an embodiment of the present disclosure.
FIG. 13 is a structural diagram of a UE provided by an embodiment of the present disclosure.
FIG. 14 is a structural diagram of a network device provided by an embodiment of the present disclosure.
FIG. 15 is a first diagram of a hardware structure of a UE provided by an embodiment of the present disclosure.
FIG. 16 is a second diagram of a hardware structure of a UE provided by an embodiment of the present disclosure.
FIG. 17 is a third diagram of a hardware structure of a UE provided by an embodiment of the present disclosure.
FIG. 18 is a first diagram of a hardware structure of a network device provided by an embodiment of the present disclosure.
FIG. 19 is a second diagram of a hardware structure of a network device provided by an embodiment of the present disclosure.
FIG. 20 is a third diagram of a hardware structure of a network device provided by an embodiment of the present disclosure.

### DETAILED DESCRIPTION

The technical solution in the embodiments of the present disclosure would be described below with reference to the accompanying drawings.

The information acquisition method provided by the present disclosure may be applied to various communication systems, such as a Long Term Evolution (LTE) system, an LTE Frequency Division Duplex (FDD), an LTE Time Division Duplex (TDD), a Universal Mobile Telecommunications System (UMTS), a Worldwide Interoperability for Microwave Access (WiMAX) communication system, a 5th Generation (5G) mobile communication system or a New Radio (NR) access technology. The 5G mobile communication system may be Non-Standalone (NSA) and/or Standalone (SA).

The information acquisition method provided by the present disclosure may also be applied to a Machine Type Communication (MTC), a Long Term Evolution-machine (LTE-M), a Device to Device (D2D) network, a Machine to Machine (M2M) network, an Internet of Things (IoT) network or other networks. The IoT network may include, for example, an Internet of Vehicles. The communication modes in the Internet of Vehicles system are collectively referred to as vehicle to X (V2X, X can represent anything). For example, the V2X may include Vehicle to Vehicle (V2V) communication, Vehicle to Infrastructure (V2I) communication, Vehicle to Pedestrian (V2P) communication or Vehicle to Network (V2N) communication, etc.

The information acquisition method provided by the present disclosure may also be applied to future communication systems, such as a sixth generation mobile communication system, etc., which would not be limited in the present disclosure.

In the embodiments of the present disclosure, the terminal device may also be referred to as a User Equipment (UE), an access terminal, a user unit, a user station, a mobile station, a mobile platform, a remote station, a remote terminal, a mobile device, a user terminal, a terminal, a wireless communication device, a user agent, or a user device, or the like.

The UE may be a device that provides voice/data connectivity to a user, for example, the UE may be a handheld device, a vehicle-mounted device that have wireless connection functions and the like. Presently, some examples of the UE may be: a mobile phone, a pad, a computer (such as a notebook computer, a palmtop computer, etc.) with a wireless transmission and reception function, a mobile internet device, a Virtual Reality (VR) device, an Augmented Reality (AR) device, a wireless device in industrial control, a wireless device in self driving, a wireless device in remote medical, a wireless device in a smart grid, a wireless device in transportation safety, a wireless device in a smart city, a wireless device in a smart home, a cellular phone, a cordless phone, a Session Initiation Protocol (SIP) phone, a Wireless Local Loop (WLL) station, a Personal Digital Assistant (PDA) device, a handheld device with a wireless communication function, a calculating device or other processing devices connected to a wireless modem, a vehicle-mounted device, a wearable device, a UE in the 5G network, or a UE in a future-evolved Public Land Mobile Network (PLMN) network, etc.

The wearable device may also be referred to as a wearable smart device, which is a general term of wearable devices developed by applying a wearable technology to intelligently design daily wearable objects, such as glasses, gloves, watches, clothing, shoes, or the like. The wearable device is directly worn on the body, or is a portable device integrated into a user's clothing or accessory. The wearable device is not only a hardware device, but also achieves powerful functions through software support, data interaction and cloud interaction. A generalized wearable smart device has full functions and a large size, and may not rely on a smart phone to implement full or part of the functions, such as a smart watch, or smart glasses, or the like; or only focus on a certain type of application function, and needs to be used in cooperation with other devices such as a smart phone, such as various kinds of smart bracelets, smart jewelry, or the like, for monitoring physical signs.

In addition, the UE may also be a UE in an Internet of things (IoT) system. The IoT is an important part of the development of information technology in the future. The main technical characteristics of the IoT are to connect goods with a network through communication technologies, so as to realize an intelligent network of human-machine interconnection and IoT. The IoT technology may achieve massive connection, deep coverage and power saving for a terminal through, for example, Narrow Band (NB) technologies.

In addition, the UE may also include an intelligent printer, a train detector, a gas station and other sensors. The main functions of the UE may include collecting data (for some UEs), receiving control information and downlink data of the network device, sending electromagnetic waves and transmitting uplink data to the network device.

In the embodiments of the present disclosure, the network device may be any device having wireless transceiver functions. The network device may include, but are not limited to, an evolved Node B (eNB), a Radio Network Controller (RNC), a Node B (NB), a Base Station Controller (BSC), a Base Transceiver Station (BTS), a home base station (such as a home evolved NodeB or a home Node B (HNB)), a Baseband Unit (BBU), an Access Point (AP) in a Wireless Fidelity (WiFi) system, a wireless relay node, a wireless backhaul node, a Transmission Point (TP) or a Transmission And Reception Point (TRP), etc. The network device may also be a gNB or a transmission point (TRP or TP) in the 5G (e.g., NR) system, one antenna panel or one group of antenna panels (including multiple antenna panels) of a base station in the 5G system, or a network node (e.g., a BBU or a Distributed Unit (DU), etc.,) constituting the gNB or the transmission point.

In some deployments, a gNB may include a Centralized Unit (CU) and a DU. The gNB may also include an Active Antenna Unit (AAU). The CU implements part of the functions of the gNB, and the DU implements part of the functions of the gNB. For example, the CU may be responsible for handling non-real-time protocols and services, such as the functions of a Radio Resource Control (RRC) layer, a Service Data Adaptation Protocol (SDAP) layer and/or a Packet Data Convergence Protocol (PDCP) layer. The DU may be responsible for handling physical layer protocols and real-time services. For example, the DU may implement functions of a Radio Link Control (RLC) layer, a Media Access Control (MAC) layer and a Physical (PHY) layer. One DU may be connected to only one CU or to multiple CUs, while one CU may be connected to multiple DUs. The communication between the CU and the DU may be achieved through an F1 interface. The AAU may realize some physical layer processing functions and functions related to RF processing and active antenna. Since information of the RRC layer would eventually be delivered to the PHY layer and become information of the PHY layer or be transformed from the information of the PHY layer, under this architecture, high-level signaling (e.g., RRC layer signaling) may also be considered as being sent by the DU or by DU + AAU.

It should be understood that the network device may be a device including one or more of a CU node, a DU node or an AAU node. Further, the CU may be divided into a network device in a Radio Access Network (RAN), or the CU may be divided into a network device in a Core Network (CN), which would not be limited herein.

The network device provides services for a cell, and the UE communicates with the cell through transmission resources (such as frequency domain resources or spectrum resources) configured by the network device. The cell may belong to a macro base station (such as a macro eNB or a macro gNB, etc.), or may belong to a base station corresponding to a small cell. The small cell may include a metro cell, a micro cell, a pico cell, a femto cell, or the like. The small cells have characteristics of small coverage and low transmission power, and are suitable for providing high-rate data transmission services.

It should be understood that the specific forms of the network device and the UE are not limited in the present disclosure.

First of all, the DRX mechanism is briefly introduced.

In order to reduce the power consumption of the UE, both the LTE system and the NR system have the DRX mechanism. The DRX mechanism includes configuring a DRX cycle for a UE in a RRC_CONNECTED state. One DRX cycle includes "On Duration" and "Opportunity for DRX": during the "On Duration" (also referred to as active time), the UE monitors and receives downlink channels and signals including a PDCCH. During the "Opportunity for DRX" (also referred to as inactive time or sleep time), the UE does not receive PDCCHs and other downlink channels and signals to reduce the power consumption.

The UE in an RRC idle state needs to receive the paging message in a similar way to the DRX. There is a paging occasion (PO) within a DRX cycle. The UE only receives the paging message within the PO, and does not receive the paging message outside the PO, so that the purpose of saving power can be achieved. The UE determines whether there is a paging message within the PO by detecting a PDCCH signal scrambled by a Paging Radio Network Temporary Identity (P-RNTI).

The following is a brief introduction to the power saving improvement of UE in different states.

### 1. power saving for the UE in a connected state

For the existing DRX mechanism, within each On Duration, the UE needs to constantly detect the PDCCH to determine whether a base station schedules the data transmission. However, for most UEs, there may be no need to receive the data transmission for a long time, but it is still necessary to maintain a regular wake-up mechanism to monitor possible downlink transmission. For such UEs, the power saving may be further optimized.

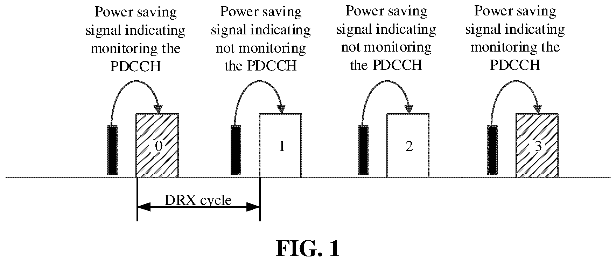

The power saving signal is introduced into the standard to further achieve the power saving of the UE. The power saving signal is used in conjunction with the DRX mechanism, and the UE receives the indication of the power saving signal before the DRX On Duration. When there is data transmission for the UE during a DRX cycle, the power saving signal "wakes up" the UE to monitor the PDCCH during the DRX On Duration. Otherwise, when there is no data transmission for the UE during the DRX cycle, the power saving signal does not "wake up" the UE, and the UE does not need to monitor the PDCCH during the DRX On Duration. Compared with the existing DRX mechanism, when there is no data transmission for the UE, the PDCCH monitoring for the UE during the DRX On Duration can be omitted, thus realizing the power saving. FIG. 1 is a first functional diagram of a power saving signal provided by an embodiment of the present disclosure. As shown in FIG. 1, the power saving signal indicates whether the terminal monitors the PDCCH during the DRX On Duration.

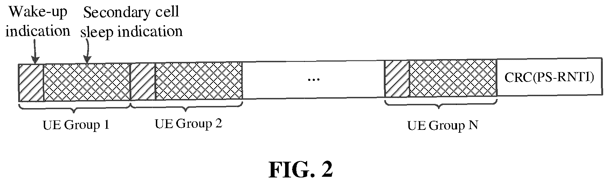

In the existing standard, the power saving signal is carried by a newly defined DCI format 2_6. The network device configures a search space set that the UE detects the PDCCH carrying the DCI format 2_6. In the power saving signal, a maximum number of bits required by a user is 6, which includes 1 wake-up indication bit and up to 5 secondary cell sleep indication bits. The power saving signal carries indication bits of multiple users to improve the use efficiency of resources. FIG. 2 is a diagram of a power saving signal carrying multi-user power saving indication information provided by an embodiment of the present disclosure. As shown in FIG. 2, the network device notifies a total number of bits of DCI and a starting position of the power saving indication bits of the UE in the DCI. The power saving indication information of the user includes wake-up indication information and secondary cell group sleep indication information. The wake-up indication information includes 1-bit information. The number of bits included in the secondary cell sleep indication information is equal to the number of secondary cell (carrier) groups configured for the user, and may be 0 to 5 bits. Further, the network may notify the UE of a total number of bits of the DCI and a Power Saving-Radio Network Temporary Identity (PS-RNTI) for scrambling the PDCCH.

### 2. power saving for the UE in the idle state/ inactive state

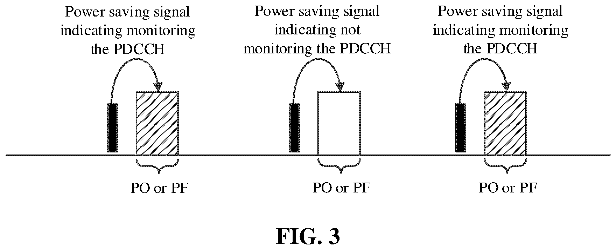

The UE in the idle state periodically receives the paging message during the corresponding PO, but in reality, the probability of the UE being paged may not be high. The UE periodically detects the PDCCH during the corresponding PO, but does not detect the paging indication information, which may result in a waste of power. Similar to the power saving for the UE in the connected state, the power saving in which the UE in the idle state receives the paging message is optimized in the standard, and a similar power saving signal is introduced. One type of power saving signal is referred to as Paging Early Indication (PEI), which is configured to indicate whether the UE receives the paging PDCCH during the target PO before the target PO arrives. The power saving signal is carried on the PDCCH, and the power saving signal may include sub-grouping information for indicating a sub-grouping of the UE corresponding to the power saving information. The sub-grouping can be further grouped for multiple UEs during a PO through calculation of UE ID. The sub-grouping information, combined with the power saving signal, can more finely indicate whether the UE needs to receive the paging during the target PO. The power saving signal may include PO group or PF group information, and may indicate power saving information of multiple POs or PFs corresponding to the power saving signal. FIG. 3 is a second functional diagram of a power saving signal provided by an embodiment of the present disclosure. As shown in FIG. 3, one power saving signal indicates whether the UE of one or more paging subgroups receive the paging message during the corresponding PO or PF.

The existing power saving signal is carried based on the PDCCH, and the UE needs to periodically turn on the receiver to detect the power saving signal. Although it saves more power than directly detecting the PDCCH for data scheduling, the power consumption of detecting the power saving signal is still relatively high.

In order to further save power, the disclosure provides an information acquisition method based on a zero-power communication. A network device transmits a first signal to a UE. The first signal is different from the existing power saving signal, and the first signal is different from the existing power saving signal in a modulation scheme, a coding scheme, a multiple access scheme or a waveform, etc., so that the UE can directly read the first signal and obtain the information carried by the first signal without periodically turning on the receiver to detect the first signal, thereby realizing further power saving.

Furthermore, a wake-up receiver specially used for receiving the first signal is disposed in the UE, or a wake-up receiver is arranged outside the UE, so that different types of information can be received and the power saving can be achieved. The wake-up receiver has characteristics of extremely low power consumption or even zero-power consumption. The wake-up receiver may be used to drive a main receiver of the UE or transmit indication information to the main receiver, so that the UE can perform corresponding processing procedures according to the wake-up signal of the wake-up receiver. The wake-up receiver may be used as a separate wake-up function module of the UE or may be used as an additional module of the receiver of the UE. In this way, the UE can turn on its main receiver based on the wake-up signal of the wake-up receiver. Otherwise the main receiver of the UE can be in a closed state, thereby realizing the purpose of reducing the power consumption of the UE.

In order to facilitate the understanding of the technical solution of the disclosure, the related technologies of the zero power communication are briefly introduced below.

A typical zero-power device for the zero-power communication is a Radio Frequency Identification (RFID) tag, which may also be referred to as a radio frequency tag of an electronic tag. The RFID tag realizes contactless automatic transmission and identification of tag information by means of the spatial coupling of wireless radio frequency signals. According to different power supply modes, the RFID tag may be divided into an active electronic tag, a passive electronic tag and a semi-passive electronic tag.

The active electronic tag, also known as an active electronic tag, refers to that the working power of the electronic tag is provided by a battery. The battery, a memory and an antenna together form the active electronic tag. Different from the active mode of the passive radio frequency, the active electronic tag transmits information through a set frequency band before replacing the battery.

The passive electronic tag, also known as a passive electronic tag, does not support a built-in battery. When the passive electronic tag approaches a Reader/Writer, the tag is within the near field range formed by an antenna radiation of the Reader/Writer. An electronic tag antenna generates an induced current through the electromagnetic induction, and the induced current drives a chip circuit of the electronic tag. The chip circuit transmits identification information stored in the tag to the Reader/Writer through the electronic tag antenna.

The semi-passive electronic tag, also known as a semi-active electronic tag, inherits advantages of small size, light weight, low price and long service life of the passive electronic tag. The built-in battery only provides power for few circuits in the chip when there is no Reader/Writer access. Only when there is the Reader/Writer access, the built-in battery supplies power to the RFID chip, so as to increase the reading and writing distance of the tag and improve the reliability of the communication.

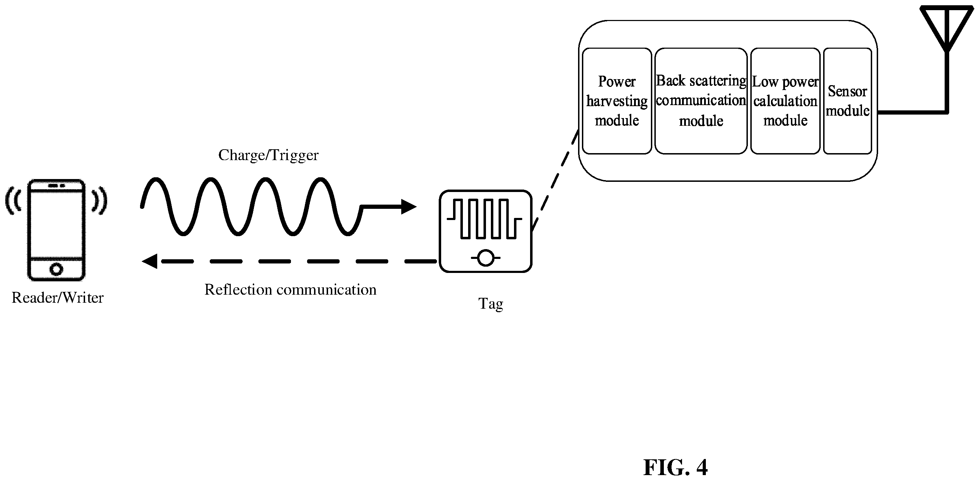

The RFID technology is a wireless communication technology, and a most basic RFID system includes an electronic tag (TAG) and a Reader/Writer. The electronic tag includes a coupling component and a chip, and each electronic tag has a respective unique electronic code, which is placed on a measured target to mark the target object. The Reader/Writer can not only read information on the electronic tag, but also write information into the electronic tag, and at the same time, the Reader/Writer can provide the electronic tag with power for communication. FIG. 4 is a diagram of a zero-power communication system provided by an embodiment of the present disclosure. As shown in FIG. 4, after entering the electromagnetic field, the electronic tag receives a radio frequency signal sent by the Reader/Writer. The passive electronic tag or the passive electronic tag transmits the information stored in the electronic tag by using the power obtained by the electromagnetic field generated in the space. The Reader/Writer reads the information and performs decoding, thus identifying the electronic tag. Exemplarily, the electronic tag includes a power harvesting module, a back scattering communication module, a low power calculation module, and a sensor module. The power harvesting module receives the electromagnetic field power and provides power for the electronic tag. The back scattering communication module receives a carrier signal, and performs back scattering after modulating the carrier signal through the low power calculation module.

The zero power communication includes the following key technologies.

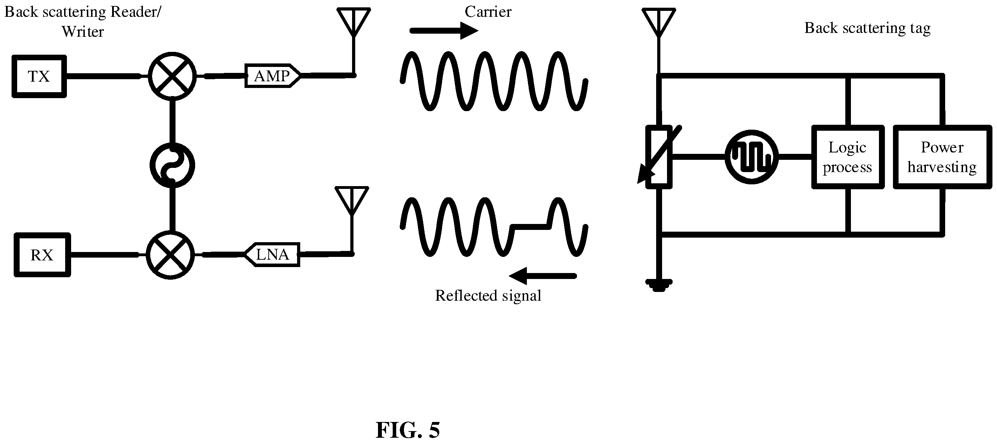

1. Back scattering communication. FIG. 5 is a diagram of a back scattering communication provided by an embodiment of the present disclosure. As shown in FIG. 5, the zero-power device, namely the back scattering tag in FIG. 5, receives a carrier signal transmitted by a back scattering Reader/Writer, collects power through the power harvesting module, and then modulates the carrier signal through the low power processing module (i.e., the logic processing module in FIG. 5), thereby realizing the back scattering communication. It can be seen that the back scattering communication has following characteristics: 1) the UE does not actively transmit signals, and realizes the back scattering communication by modulating the carrier signal; 2) The UE does not rely on a traditional active power amplification transmitter, and uses a low power computing unit at the same time, which greatly reduces the hardware complexity; 3) A battery-free communication can be realized by combining the power harvesting.

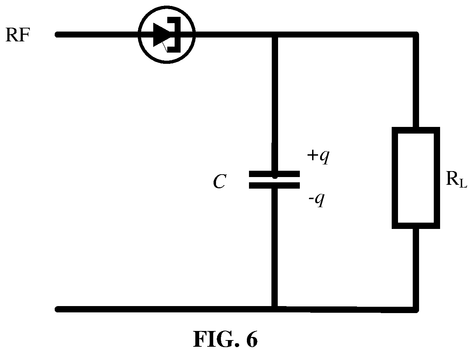

2. Power harvesting (RF). FIG. 6 a diagram of power harvesting provided by an embodiment of the present disclosure. As shown in FIG. 6, the power harvesting module is used to collect the power of space electromagnetic waves through the electromagnetic induction, so as to drive a load circuit (such as a low power calculation circuit, a sensor circuit, etc.), thereby realizing the battery-free operation.

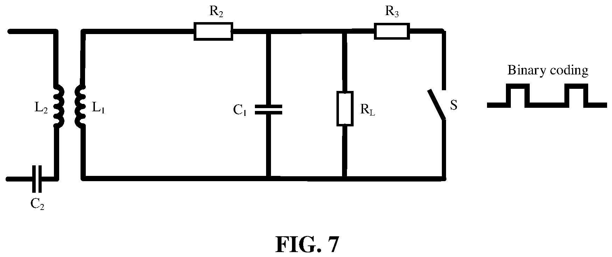

3. Load modulation. The load modulation is a common method used by the electronic tag to transmit data to Reader/Writer. The load modulation adjusts electrical parameters of an oscillation loop of the electronic tag according to a beat of a data stream, so that a size and phase of an impedance of the electronic tag are changed accordingly, thereby completing the modulation process. The load modulation technology mainly includes the resistance load modulation and the capacitance load modulation. FIG. 7 is a diagram of a resistive load modulation circuit provided by an embodiment of the present disclosure. As shown in FIG. 7, in the resistive load modulation, the load is connected in parallel with a resistor, where is called a load modulation resistor. The resistor is turned on or turned off according to a clock of the data stream. The on/off of the switch S is controlled by binary data coding. In the capacitive load modulation, the load is connected in parallel with a capacitor, which is called a load modulation capacitor. The capacitor replaces the load modulation resistor controlled by the binary data coding in FIG. 7.

4. Coding. The data transmitted by the electronic tag can use different forms of codes to represent binary "1" and "0". A radio frequency identification system generally uses one of following coding methods: Non-Return-to-Zero code, Manchester code, Unipolar Return to Zero (Unipolar RZ) code, Differential Binary Phase (DBP) code, Miller code or differential code. Generally speaking, different pulse signals are used to represent 0 and 1.

Based on the above zero-power communication technology, the wake-up receiver of the technical solution of the present disclosure adopts a technology similar to the RFID, and may include the passivity, the envelope detection, the power harvesting and the like. The wake-up receiver can be activated and powered by the radio frequency signal, which can drive the wake-up receiver to receive channels/signals/information and to transmit indication information to the main receiver of the UE, so as to wake up the main receiver of the UE for corresponding processing.

Based on the wake-up function of the wake-up receiver, the wake-up function is currently only used for a paging-related wake-up function. The wake-up receiver receives the wake-up signal transmitted by the network, and further wakes up the main receiver of the UE if it is needed to be waked up. The main receiver of the UE may sleep deeply or even be turned off, and only receive the power saving signal through the passive wake-up receiver. At present, the wake-up function of the wake-up receiver mainly considers the power saving of the UE in the idle/inactive state, which is not fully utilized to realize a further power saving of the UE.

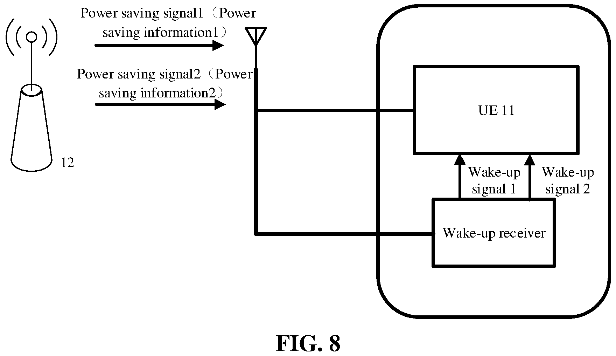

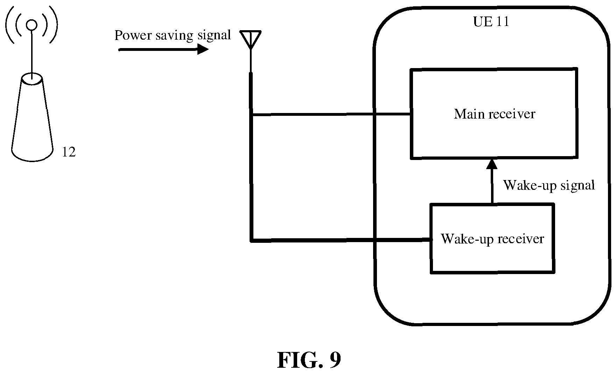

Scenarios of the information acquisition method provided by embodiments of the present disclosure are briefly described below with reference to FIG. 8 and FIG. 9.

FIG. 8 is a first scenario diagram of an information acquisition method provided by an embodiment of the present disclosure. As shown in FIG. 8, the scenario includes a UE 11 and a network device 12. The UE 11 includes a main receiver and a wake-up receiver, and the main receiver is connected to the wake-up receiver. As an example, the network device 12 transmits a power saving signal, such as the power saving signal 1 and power saving signal 2 in FIG. 8, to the UE 11. The power saving signal 1 carries power saving information 1, and the power saving signal 2 carries power saving information 2. The type of the power saving information is not specifically limited in this example. The UE 11 receives the power saving information through the wake-up receiver, and wakes up the main receiver of the UE through the wake-up signal, such as the wake-up signal 1 and the wake-up signal 2 in FIG. 8. The wake-up signal 1 may carry the corresponding power saving information 1, and the wake-up signal 2 may carry the corresponding power saving information 2. In this example, when there is no need for the transmission, the main receiver of the UE can be completely turned off, and the UE receives the signal from the network side only through the zero-power wake-up receiver, thereby further reducing the power consumption of the UE.

FIG. 9 is a second scenario diagram of the information acquisition method provided by an embodiment of the present disclosure. As shown in FIG. 9, the scenario also includes a UE 11, a network device 12 and a wake-up receiver 13. The UE 11 is connected to the wake-up receiver 13, and the wake-up receiver 13 can be regarded as an external device of the UE 11. Similar to the example of FIG. 8, the UE 11 shown in FIG. 9 receives the power saving signal through the wake-up receiver 13 and wakes up the UE through the wake-up signal, so that the UE can perform the processing procedure corresponding to the wake-up signal. In this example, when there is no need for the transmission, the UE can enter a sleep period, and only receives the signal from the network side through the peripheral wake-up receiver, thereby further reducing the power consumption of the UE.

In order to facilitate the understanding of the embodiments of the present disclosure, following explanations are made.

In the embodiments of the present disclosure, terms "system" and "network" are often interchangeably used here. The term "and/or" is only an association relationship describing associated objects, and indicates that there may be three relationships. For example, A and/or B may indicate three situations, i.e., A exists alone, A and B exist simultaneously, and B exists alone. Furthermore, in the disclosure, a character "j" generally indicates that anterior and posterior associated objects are in a "or" relationship.

Terms used in sections of the embodiments of the disclosure are only intended to explain specific embodiments of the disclosure, and are not intended to limit the disclosure. Terms "first", "second", "third", "fourth" or the like in the description, claims and the drawings of the disclosure are intended to distinguish different objects, and are not intended to describe a specific order. Furthermore, terms "include", "have" as well as any variations thereof, are intended to cover a non-exclusive inclusion.

The "indication" mentioned in the embodiments of the disclosure may be a direct indication, or may be an indirect indication, or may indicate that there is an association relationship. For example, A indicates B, which may mean that A directly indicates B, for example, B may be obtained through A; or may mean that A indirectly indicates B, for example, A indicates C, and B may be obtained through C; or may indicate that there is an association relationship between A and B.

In the embodiments of the disclosure, a term "corresponding" may indicate that there are direct or indirect correspondences between two items, or may indicate that there is an association relationship between two items, or may be a relationship such as indicating and indicated, configuring and configured, etc.

In the embodiments of the disclosure, "predefined" or "preconfigured" may be implemented by pre-saving corresponding codes, tables or other manners which may be used to indicate related information in a device (for example, including a UE and a network device), specific implementations thereof are not limited in the disclosure. For example, "predefined" may refer to defined in a protocol.

In embodiments of the present disclosure, the "protocol" may refer to standard protocols in the communication field, and may include, for example, an LTE protocol, an NR protocol and related protocols applied in future communication systems, which are not limited in the present disclosure.

The technical solution provided by the embodiments of the present disclosure is described in detail by specific embodiments. It should be noted that the technical solution provided by the embodiments of the present disclosure may include part of or all of following contents, and the following specific embodiments may be combined with each other. The same or similar concepts or processes may not be elaborated in some embodiments.

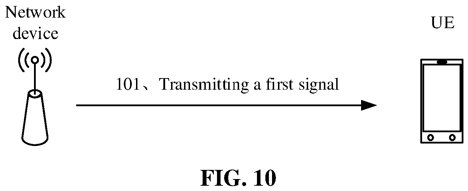

FIG. 10 is a first flowchart of an information acquisition method provided by an embodiment of the present disclosure. As shown in FIG. 10, the information acquisition method of the embodiment includes operation 101.

At operation 101, a network device transmits a first signal to a UE.

In the embodiment, the UE receives the first signal from the network device, and the first signal carries at least one type of information. The first signal may correspond to the above power saving signal, and the information carried by the first signal may correspond to the above power saving information.

In an optional embodiment, the first signal is different from a second signal from the network device in at least one of a waveform, a multiple access scheme, a modulation scheme or a coding scheme.

Optionally, modulation schemes of the first signal and the second signal are different. The modulation scheme of the first signal includes any one of Amplitude Shift Keying (ASK) modulation, Frequency Shift Keying (FSK) modulation or Binary Phase Shift Keying (2PSK) modulation. The modulation scheme of the second signal includes any one of Orthogonal Frequency Division Multiplexing (OFDM) modulation, Quadrature Phase Shift Keying (QPSK) modulation or Quadrature Amplitude Modulation (QAM).

The ASK is the digital modulation in which an amplitude of a carrier varies with a digital baseband signal. When the digital baseband signal is binary, the ASK is binary Amplitude Shift Keying (2ASK). The 2ASK, also referred to as an On-Off Keying (OOK), controls the turn-on and turn-off of sinusoidal carrier using unipolar non-return-to-zero code sequence. Alternatively, the ASK also includes 4ASK, 8ASK, etc., which would not be limited in the embodiment.

The FSK is the digital modulation in which a frequency of a carrier varies with the digital baseband signal. When the digital baseband signal is binary, the FSK is binary Frequency Shift Keying (2FSK). The 2FSK implements the information transmission by transforming two different carrier signals into digital signals. The state of the transmitted information is characterized by the change of the frequency of the carrier, and the frequency of the modulated carrier varies with the states of 0 and 1 of the binary sequences. Optionally, the FSK also includes 4FSK, 8FSK, etc., which would not be limited in the embodiment.

PSK is the digital modulation in which a phase of a carrier varies with the digital baseband signal. The 2PSK is a simplest form of the PSK. The 2PSK uses two carriers with an initial phase different of 180 to transmit the binary information, and i also known as the BPSK. The QPSK is a quadrature phase shift keying, which uses four different phase differences of the carriers to represent the input digital information.

The OFDM is a kind of Multi Carrier Modulation (MCM). A main principle of the OFDM is to divide a channel into several orthogonal sub-channels, convert a high-speed data signal into parallel low-speed sub-data streams, and modulate the low-speed sub-data streams to each sub-channel for transmission. The OFDM includes V-OFDM, W-OFDM, F-OFDM, MIMO-OFDM, multi-band-OFDM and the like, which would not be limited in the embodiment.

The QAM uses two independent baseband digital signals to suppress the double sideband modulation of carriers for two orthogonal carriers with same frequency, and utilizes a character of the orthogonal spectrum of the modulated signals in the same bandwidth to realize two parallel digital information transmissions. The QAM is a modulation technology that combines a Multi-system Amplitude Shift Keying (MASK) with Multi-system Phase Shift Keying (MPSK), and can double the bandwidth expansion.

As can be seen from the above embodiments, the first signal is generated using a simple, low-order digital modulation scheme, and the second signal is generated using a relatively complex, high-order, orthogonal digital modulation scheme. The signal complexity of the first signal is relatively low compared to the second signal.

It should be noted that the examples of the modulation schemes of the first signal and the modulation schemes of the second signal in the above embodiments are merely exemplary, and should not constitute any limitation to the present disclosure. Other existing or future defined modulation schemes are not excluded for generating the first signal or the second signal.

It should be understood that waveforms of modulated signals generated by using different modulation schemes are different. In the embodiments of the present disclosure, the modulation schemes of the first signal and the second signal are different, and thus the waveforms of the first signal and the second signal are different.

Usually, the waveform refers to a waveform of a time domain signal. In the embodiments of the present disclosure, the waveform of the modulated first (time domain) signal is different from the waveform of the second (time domain) signal.

Optionally, the coding schemes of the first signal and the second signal are different. The coding scheme of the first signal includes any one of Non-Return-to-Zero code, Manchester code, unipolar return to zero code, differential binary phase code, Miller code or differential code. The coding scheme of the second signal includes any one of Reed-Muller (RM) code, Tail-biting Convolutional Code (TBCC), Turbo code, outer code, Low Density Parity Check Code (LDPC) or Polar code.

It should be noted that signal coding includes signal source coding and channel coding, and the function of the signal coding is to match information to be transmitted with a transmission channel as much as possible and provide some protection for the information to prevent interference and improve the effectiveness of the information transmission. The coding scheme of the first signal belongs to the signal source coding, and the coding scheme of the second signal belongs to the channel coding. The examples of the coding schemes of the first signal or the second signal in the above embodiments are merely exemplary and should not constitute any limitation to the present disclosure. Other existing or future defined coding schemes are not excluded.

Optionally, the multiple access schemes of the first signal and the second signal are different. The multiple access scheme of the first signal includes any one of Frequency Division Multiple Access (FDMA), Time Division Multiple Access (TDMA) or Code Division Multiple Access (CDMA). The multiple access scheme of the second signal includes any one of Orthogonal Frequency Division Multiple Access (OFDMA) or Discrete Fourier Transform Spread Orthogonal Frequency Division Multiplexing (DFTS-OFDM).

The FDMA uses different frequency bands to distinguish users. That is, users' data is transmitted on different frequency bands. For example, the first generation mobile communication system adopts the FDMA as the multiple access scheme. The TDMA uses different slots to distinguish users. That is, the users' data is transmitted on different slots. For example, the second generation mobile communication system adopts the TDMA as the multiple access scheme. The CDMA uses different code words to distinguish users. That is, the users' data is scrambled with different code words. For example, the third generation mobile communication system mainly adopts the CDMA as the multiple access scheme. The OFDMA is an evolution of the OFDM technology. The OFDMA combines the OFDM and the FDMA technologies, which improves the spectrum efficiency compared with the FDMA.

As can be seen from the above embodiment, the multiple access scheme adopted by the first signal is simpler than that adopted by the second signal. The examples of the multiple access schemes of the first signal and the multiple access schemes of the second signal in the above embodiments are merely exemplary and should not constitute any limitation to the present disclosure. Other existing or future defined multiple access schemes are not excluded.

In an optional embodiment, the UE receives the first signal from the network device, which includes the operation that the UE receives the first signal from the network device through a wake-up receiver.

Optionally, as illustrated in FIG. 8, the wake-up receiver can be a built-in receiver of the UE, and the wake-up receiver is connected to a built-in main receiver of the UE. The wake-up receiver receives the first signal from the network device, identifies information carried by the first signal, and wakes up the main receiver of the UE through a corresponding wake-up signal.

Optionally, as illustrated in FIG. 9, the wake-up receiver may also be an external receiver of the UE. The wake-up receiver receives the first signal from the network device, identifies information carried by the first signal, and wakes up the UE through a corresponding wake-up signal.

It should be noted that the wake-up receiver may be a low-power or zero-power receiver based on the wireless power supply, and may also be a low-power or zero-power receiver powered by the UE, which would not be limited in the embodiments of the present disclosure.

The UE of the embodiments receives the first signal through the wake-up receiver, thus the first signal can be received at any time through the wake-up receiver and wake up the UE, thereby saving the power consumption caused by the periodic reception or detection of the UE.

Optionally, in some embodiments, the wake-up receiver in the above embodiments may also be referred to as a first receiver and the main receiver of the above embodiments may also be referred to as a second receiver.

In an optional embodiment, the first signal carries at least one of: physical layer control information, transmission indication information of a channel, transmission indication information of a signal, information of a Radio Resource Control (RRC) layer or information of a Media Access Control (MAC) layer.

It should be noted that the information carried by the first signal is not limited to the above information, and other information to be transmitted can be carried in the first signal, which would not be limited in the embodiments of the present disclosure.

Optionally, the physical layer control information includes Downlink Control Information (DCI), physical layer information carried in the Physical Broadcast Channel (PBCH), physical layer timing information, information related to physical layer timing and synchronization, and the like.

Optionally, the DCI carried by the first signal includes at least one of: update information of a system message, indication information of an Earthquake and Tsunami Warning System (ETWS), indication information of a Commercial Mobile Alert System (CMAS), information of stopping paging monitoring, request information of Channel State Information (CSI), CSI triggering state information, a Transmission Power Control (TPC) command of a Physical Uplink Control Channel (PUCCH) or a Physical Uplink Shared Channel (PUSCH), a TPC command of a Sounding Reference Signal (SRS), an SRS request, indication information of cancelling an uplink transmission, or non-transmission indication information of a target resource.

Optionally, the transmission indication information of the channel includes transmission indication information of at least one of a Physical Downlink Control Channel (PDCCH), a Physical Downlink Shared Channel (PDSCH), a Physical Uplink Control Channel (PUCCH), or a Physical Uplink Shared Channel (PUSCH).

The transmission indication information of the PDCCH includes: reception indication information of the PDCCH, and the reception indication information of the PDCCH is configured to indicate the UE to detect the PDCCH on a target monitoring occasion or a monitoring occasion set. Further, the reception indication information of the PDCCH is configured to indicate the UE to detect the PDCCH on a monitoring occasion or a monitoring occasion set of a target PDCCH search space.

The transmission indication information of the PDSCH includes: reception indication information of the PDSCH, and the reception indication information of the PDSCH is configured to indicate the UE to detect the PDSCH on a target monitoring occasion or a monitoring occasion set.

The transmission indication information of the PUCCH includes: transmission indication information of the PUCCH, and the transmission indication information of the PUCCH is configured to indicate the UE to transmit the PUCCH on a target transmission occasion or a transmission occasion set.

The transmission indication information of the PUSCH includes: transmission indication information of the PUSCH, and the transmission indication information of the PUSCH is configured to indicate the UE to transmit the PUSCH on a target transmission occasion or a transmission occasion set.

It should be noted that the channel transmission indication information carried by the first signal is only for example, and the first signal may also carry transmission indications of other types of channels, which would not be limited in the embodiments of the present disclosure.

Optionally, the transmission indication information of the signal includes transmission indication information of at least one of an aperiodic Channel State Information reference signal (CSI-RS), a Sounding Reference Signal (SRS), a Synchronization Signal Block (SSB), a Tracking Reference Signal (TRS) or a phase Tracking Reference Signal (PTRS).

The transmission indication information of the CSI-RS includes: reception indication information of the CSI-RS, and the reception indication information of the CSI-RS is configured to indicate the UE to receive the CSI-RS on a target monitoring occasion or a monitoring occasion set.

The transmission indication information of the SRS includes: transmission indication information of the SRS, and the transmission indication information of the SRS is configured to indicate the UE to transmit the SRS on a target monitoring occasion or a monitoring occasion set.

The transmission indication information of the SSB includes: reception indication information of the SSB, the reception indication information of the SSB is configured to indicate the UE to receive the SSB on a target monitoring occasion or a monitoring occasion set.

The transmission indication information of the TRS includes: reception indication information of the TRS, and the reception indication information of the TRS is configured to indicate the UE to receive the TRS on a target monitoring occasion or a monitoring occasion set.

The transmission indication information of the PTRS includes: reception indication information of the PTRS, and the reception indication information of the PTRS is configured to indicate the UE to receive the PTRS on a target monitoring occasion or a monitoring occasion set.

It should be noted that the signal transmission indication information carried by the first signal is only for example, and the first signal may also carry transmission indications of other types of signals, which would not be limited in the embodiments of the present disclosure.

Optionally, information of the RRC layer may include measurement configuration information, DRX configuration information, system messages (e.g., SIB), broadcast messages (e.g., MIB), or UE-specific RRC signaling, etc.

Optionally, information of the MAC layer may include a DRX command or a timing advance (TA) command carried by the MAC CE, etc.

In an optional embodiment, first signals carrying different types of information correspond to different transmission resources. The UE can determine the type of information carried by the first signal through the transmission resource.

In an optional embodiment, first signals carrying different types of information correspond to a same transmission resource.

Optionally, the first signal further includes identification information, and the identification information is configured to indicate a type of information carried by the first signal. The UE determines the type of information carried by the first signal through the identification information of the first signal.

The above embodiments provide an information acquisition method. A UE receives a first signal from a network device. The first signal can carry different types of information. The first signal is different from the second signal transmitted by the network device to the UE in the existing system. The first signal is different from the second signal in terms of the modulation scheme, the coding scheme, the multiple access scheme and the waveform. The UE can receive the first signal through the wake-up receiver with low power consumption, so that the UE can obtain information without periodically turn on the main receiver to receive or detect the existing channel. Due to the extremely low power consumption of the wake-up receiver and the event triggering receiving scheme, the power consumption of the UE can be further reduced, so that the UE can save more power.

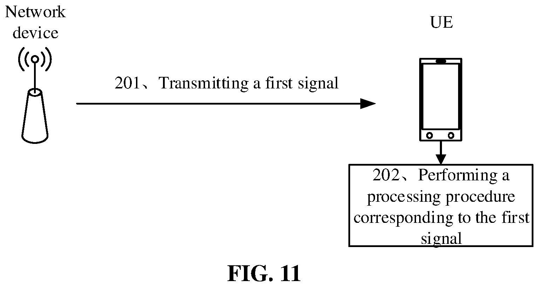

FIG. 11 is a second flowchart of an information acquisition method provided by an embodiment of the present disclosure. As shown in FIG. 11, the information acquisition method provided by the embodiment includes operation 201 and operation 202.

At the operation 201, a network device transmits a first signal to a UE.

Reference can be made to the operation 101 of the above embodiments, and would not be elaborated here.

At the operation 202, the UE performs a processing procedure corresponding to the first signal.

The UE determines the corresponding processing procedure according to the information carried by the received first signal. The UE performs the processing procedure corresponding to the first signal, and the processing procedure includes at least one of: receiving or transmitting a channel, receiving or transmitting a signal, adjusting a power, or cancelling rate matching between uplink transmission and a downlink resource.

As an example, if the first signal received by the UE carries CSI request information, the UE measures an aperiodic CSI-RS according to the first signal and reports the aperiodic CSI.

As an example, if the first signal received by the UE carries a TPC command of a PUCCH and a PUSCH or carries a TPC command of an SRS, the UE performs the power control according to the first signal.

As an example, if the first signal received by the UE carries a SRS request, the UE transmits an SRS signal to the network device according to the first signal at a transmission resource location indicated by the SRS request.

As an example, if the first signal received by the UE carries indication information of canceling the uplink transmission, the UE does not perform the uplink transmission at a time-frequency domain resource position indicated by the indication information according to the first signal.

As an example, if the first signal received by the UE carries non-transmission indication information of a target resource, the UE does not perform the uplink transmission and the downlink transmission at the time-frequency domain resource position indicated by the indication information according to the first signal.

In an optional embodiment, a time interval between the UE receiving the first signal and the UE starting to perform a processing procedure corresponding to the first signal is greater than or equal to a preset threshold.

In an optional embodiment, a time interval between the network device transmitting the first signal and the UE starting to perform the processing procedure corresponding to the first signal is greater than or equal to the preset threshold.

Optionally, the preset threshold is determined based on at least one of: processing capability of the UE, or preparation time for the UE to perform the processing procedure corresponding to the first signal.

Optionally, the preset threshold is a threshold configured by a network or a predefined threshold.

Optionally, the first signal has different transmission timing according to different types of information carried by the first signal.

Exemplarily, the UE may need different preparation time for receiving different channels or signals, which depends on the processing capability of the UE, the time of turning on the main receiver to receive the channel or the signal, the time-frequency recovery time, and the like. Therefore, it should be ensured that there is a certain minimum time interval between the transmission time of the first signal and a target reception time of the target channel or signal, and the minimum time interval may be configured by a network or predefined.

For example, after receiving the first signal, the UE triggers a related subsequent processing procedure, and it is also necessary to reserve processing time for the UE, such as reporting the CSI, adjusting the power according to the TPC, transmitting the aperiodic SRS, cancelling the rate matching between the uplink transmission and the downlink resource, etc. Therefore, it should be ensured that there is a certain minimum time interval between the transmission time of the first signal and a starting time of the processing procedure, and the minimum time interval may also be configured by the network or predefined.

Based on the above several embodiments, effects of the solution of the present disclosure would be described in detail below in conjunction with several specific examples.

### 1. The first signal carries specific information.

Exemplarily, taking a short message as an example, the short message includes update information of a system message, indication information of an ETWS, indication information of a CMAS, information of stopping paging monitoring. Usually, for the UE in the connected state or the idle/inactive state, the short message needs to be received through a paging PDCCH.

Specifically, the network device carries indication information of the short message (2 bits) and short message information (8 bits) through DCI format 1_0 scrambled by P-RNTI. When the indication information of short message indicates 10 or 11, the update information of the system message may be indicated by 1 bit, the ETWS and/or the CMAS may be indicated by 1 bit, and stopping monitoring the PDCCH at a PO may be indicated by 1 bit (i.e., stopping the paging monitoring may be indicated by 1 bit).

In this example, the network device transmits a first signal to the UE, and the first signal carries update information of the system message carried on an existing paging PDCCH, the indication information of the ETWS, the indication information of the CMAS and the information of stopping the paging monitoring.

It can be understood that in some scenarios, the above information would not be frequently transmitted, and the power consumption of the UE periodically detecting the paging PDCCH to obtain the information is high. If the UE receives the first signal carrying the above information through the wake-up receiver, the operation that the UE detects the paging PDCCH can be reduced. When there is no other demand for reception and transmission, the UE can completely turn off its main receiver and receive the above information only through the wake-up receiver, thereby realizing further power saving.

In a possible implementation, if the first signal carries the update information of the system message, the UE receives the first signal through the wake-up receiver, and turns on the main receiver of the UE according to the update information of the system message carried by the first signal to receive a type 0 PDCCH, thereby receiving the system message. Otherwise, the UE does not need to periodically turn on the main receiver for receiving the update information of the system, thereby realizing further power saving.

In a possible implementation, if the first signal carries the indication information of the ETWS and/or the CMAS, the UE receives the first signal through the wake-up receiver, and performs corresponding subsequent operations according to the indication information of the ETWS and/or the CMAS carried by the first signal, so that the UE does not need to periodically receive the paging PDCCH for receiving the information, thereby realizing further power saving.

In a possible implementation, if the first signal carries the paging information, the UE receives the first signal through the wake-up receiver, and turns on the main receiver of the UE according to the paging information carried by the first signal to receive the paging PDCCH and the paging message. Alternatively, the information carried by the first signal may also carry an identification of a UE or a UE group. Alternatively, the information carried by the first signal may also carry information of a Paging Occasion (PO) or a PO group. Alternatively, the information carried by the first signal may also carry information of a Paging Frame (PF) or a paging frame group. After receiving the above information, the wake-up receiver may determine whether it is necessary to wake up the main receiver of the UE.

Based on the above description, the short message is carried by the first signal, so that the UE can receive the information directly through the wake-up receiver, thereby avoiding periodic reception of the paging PDCCH and obtaining greater power saving gains.

### 2. The first signal carries the indication of different types of channels.

In the existing systems, the reception of the channel by the UE is mostly periodic. For example, the reception of the PDCCH is detected based on a search space configured by a network. The reception of the channel requires the UE to detect the channel according to the period. Although the receiver of the UE is not always turned off, periodic detection still causes power consumption of the UE. In particular, the network does not always need to transmit channels (e.g., the PDCCH) for the UE. However, the UE always detects the PDCCH at the monitoring occasion corresponding to the search space of the PDCCH.

In this example, the network device transmits the first signal to the UE, and the first signal indicates the UE to receive or detect a particular channel.

Exemplarily, taking the PDCCH as an example, the indication information may be transmitted to the wake-up receiver through the first signal before the monitoring occasion of the PDCCH arrives. The indication information indicates that the UE needs to monitor the PDCCH within the arrived PDCCH monitoring occasion or monitoring occasion set. The wake-up receiver can identify the indication information carried by the received first signal, and indicate the UE to detect the PDCCH at the target PDCCH monitoring occasion or the monitoring occasion set through a corresponding wake-up signal. Further, since the UE may be configured with a plurality of search spaces of the PDCCH, the indication information may also include search space information of the PDCCH to indicate the UE to monitor the PDCCH within a monitoring occasion or a monitoring occasion set of the search space of the target PDCCH.

### 3. The first signal carries the indication of different types of signals.

The first signal may be used to carry indication information of different types of periodic signals, or indication information of different types of aperiodic signals.

In this example, the network device transmits the first signal to the UE, and the first signal indicates the UE to receive or detect a specific signal.

Exemplarily, the first signal carries indication information of an aperiodic CSI-RS (i.e., the CSI request information) to indicate the UE to measure the aperiodic CSI-RS and report the aperiodic CSI. The information is transmitted to the UE through DCI format 0_1 and 0_2 in the existing system. After the wake-up receiver is adopted, the UE may not need to obtain the CSI request information through the DCI, and can receive the CSI request information at any time through the wake-up receiver, which saves the power consumption for receiving the PDCCH. Further, the information carried by the first signal may also include aperiodic CSI resource information, such as an ID of a CSI-RS resource.

4. The first signal carries different types of information, and different types of information correspond to different processing procedures of the UE.

### (1) Aperiodic CSI report

In the existing systems, the network may send the CSI request through the DCI format 0_1 and 0_2 to indicate the UE to perform the aperiodic CSI report for the aperiodic CSI-RS resources. After the wake-up receiver is adopted, the UE may not need to obtain the CSI request information through the DCI, and can receive the CSI request information at any time through the wake-up receiver, which saves the power consumption for receiving the PDCCH. Further, the information carried by the first signal may also include CSI triggering states information, which includes the CSI-RS resource information, the interference measurement reference signal resource information, etc.

### (2) Power control

In the existing systems, the DCI format 2_2 is used to indicate the TPC commands of the PUCCH and the PUSCH to the UE. The DCI format 2_3 is used to indicate the TPC command of the SRS to the UE. After the wake-up receiver is adopted, the UE may not need to obtain the TPC commands through the DCI, and can receive the TPC commands at any time through the wake-up receiver, which saves the power consumption for receiving the PDCCH.

### (3) SRS Request

In the existing systems, the network can indicate the UE to send the aperiodic SRS through the DCI format 2_3, 1_2, 1_1, 0_2 and 0_1. After the wake-up receiver is adopted, the UE may not need to obtain the SRS request through the DCI, and can receive the SRS request at any time through the wake-up receiver, which saves the power consumption for receiving the PDCCH. Further, the information carried by the first signal may also include the SRS resource set information.

### (4) Cancelling uplink transmission

In the existing systems, in order to support the Ultra-Reliable Low-Latency Communications (URLLC) service, the network may indicate UE to cancel the uplink transmission on a corresponding Physical Resource Block (PRB) and OFDM symbol through the DCI format 2_4, thereby providing avoidance for the transmission of the URLLC service. After the wake-up receiver is adopted, the UE may not need to obtain the cancellation indication through the DCI, and can receive the cancellation indication at any time through the wake-up receiver, which saves the power consumption for receiving the PDCCH. Further, the information carried by the first signal may also include information of at least one of PRB or OFDM symbol where the uplink transmission is canceled.

### (5) Non-transmission indication of the target resource

In the existing systems, in order to support the URLLC service and provide avoidance for the emergency transmission of the URLLC service, the network may indicate, through the DCI format 2_1, that some PRB and OFDM symbol resources are not used for the transmission of the UE. However, these resources may have been previously scheduled to the UE for the downlink data transmission. After receiving the indication, the UE considers that these resources are not used for the data transmission of the UE, and it is necessary to perform the rate matching for these resources. After the wake-up receiver is adopted, the UE may not need to obtain the non-transmission indication through the DCI, and can receive the non-transmission indication at any time through the wake-up receiver, which saves the power consumption for receiving the PDCCH. Further, the information carried by the first signal may also include information of at least one of PRB or OFDM symbol corresponding to the non-transmission indication.

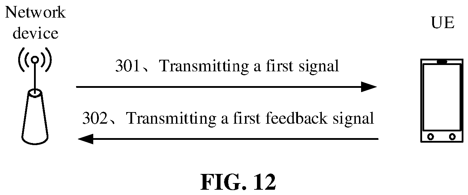

FIG. 12 is a third flowchart of an information acquisition method provided by an embodiment of the present disclosure. As shown in FIG. 12, the information acquisition method of the embodiment includes operation 301 and operation 302.

At the operation 301, a network device transmits a first signal to a UE.

Reference can be made to the operation 101 of the above embodiments, and would not be elaborated here.

At operation 302, the UE transmits a first feedback signal to the network device.

Specifically, the UE determines feedback information corresponding to the information carried by the first signal according to the first signal from the network device, and transmits the first feedback signal to the network device. The first feedback signal carries feedback information corresponding to at least one type of information.

It should be noted that the UE determines feedback information corresponding to the information carried by the second signal according to the second signal from the network device, and transmits a second feedback signal to the network device. The second feedback signal carries feedback information corresponding to the at least one type of information.

In an optional embodiment, the first feedback signal is different from the second feedback signal transmitted by the UE to the network device in at least one of the waveform, the multiple access scheme, the modulation scheme or the coding scheme. The first feedback signal corresponds to the first signal and the second feedback signal corresponds to the second signal.

Optionally, the modulation schemes of the first feedback signal and the second feedback signal are different. The modulation scheme of the first feedback signal includes any one of Amplitude Shift Keying (ASK) modulation, Frequency Shift Keying (FSK) modulation or Binary Phase Shift Keying (2PSK) modulation. The modulation scheme of the second feedback signal includes any one of Orthogonal Frequency Division Multiplexing (OFDM) modulation, Quadrature Phase Shift Keying (QPSK) modulation or Quadrature Amplitude Modulation (QAM).

It should be understood that waveforms of signals generated by different modulation schemes are different. In the embodiments of the present disclosure, the modulation schemes of the first feedback signal and the second feedback signal are different. Therefore, the waveforms of the first feedback signal and the second feedback signal are different.

Optionally, the coding schemes of the first feedback signal and the second feedback signal are different. The coding scheme of the first feedback signal includes any one of Non-Return-to-Zero code, Manchester code, unipolar return to zero code, differential binary phase code, Miller code or differential code. The coding scheme of the second feedback signal includes any one of Reed-Muller (RM) code, Tail-biting Convolutional Code (TBCC), Turbo code, outer code, Low Density Parity Check Code (LDPC) or Polar code.

Optionally, the multiple access schemes of the first feedback signal and the second feedback signal are different. The multiple access scheme of the first feedback signal includes any one of Frequency Division Multiple Access (FDMA), Time Division Multiple Access (TDMA) or Code Division Multiple Access (CDMA). The multiple access scheme of the second feedback signal includes any one of Orthogonal Frequency Division Multiple Access (OFDMA) or Discrete Fourier Transform Spread Orthogonal Frequency Division Multiplexing (DFTS-OFDM).

As can be seen from the above embodiments, similar to the first signal, the first feedback signal is generated using a simple, low-order digital modulation scheme. Similar to the second signal, the second feedback signal is generated using a relatively complex, high-order, orthogonal digital modulation scheme. The signal complexity of the first feedback signal is relatively low compared to the second feedback signal.

It should be noted that the examples of the modulation schemes, coding schemes, multiple access schemes of the first feedback signal in the above embodiments are merely exemplary and should not constitute any limitation to the present disclosure. The examples of the modulation schemes, coding schemes, multiple access schemes of the second feedback signal in the above embodiments are merely exemplary and should not constitute any limitation to the present disclosure.

In an optional embodiment, the UE receives the first signal through a wake-up receiver, and the first signal carries different types of information. The UE can transmit the first feedback signal through a wake-up transmitter, and the first feedback signal carries feedback information.

In an optional embodiment, the UE receives the first signal through the wake-up receiver, and the first signal carries different types of information. The UE may transmit the second feedback signal through a main transmitter, and the second feedback signal carries feedback information.

It should be noted that the wake-up receiver may be a low-power or zero-power receiver based on the wireless power supply, or may be a low-power or zero-power receiver powered by the UE. The wake-up transmitter may be a low-power or zero-power transmitter based on the wireless power supply, or may be a low-power or zero-power transmitter powered by the UE.

The above embodiments illustrate an information acquisition method. A UE receives a first signal from a network device. The first signal may carry different types of information. The first signal is different from the second signal transmitted by the network device to the UE in the existing system. The first signal is different from the second signal in terms of a modulation scheme, a coding scheme, a multiple access scheme and a waveform. The UE transmits a first feedback signal to the network device according to the first signal, and the first feedback signal carries feedback information. The first feedback signal is different from the second feedback signal transmitted by the network device to the UE in the existing system. The first feedback signal is different from the second feedback signal in terms of the modulation scheme, the coding scheme, the multiple access scheme and the waveform. The UE can receive the first signal through a low-power wake-up receiver, and the UE can transmit the first feedback signal carrying the feedback information through a low-power wake-up transmitter or transmit the second feedback signal carrying the feedback information through the main transmitter. The above solution can further reduce the power consumption of the UE and make the UE more energy-efficient.

The information acquisition method provided by the embodiments of the present disclosure has been described in detail above. The UE and the network device provided by the embodiments of the present disclosure would be described below.

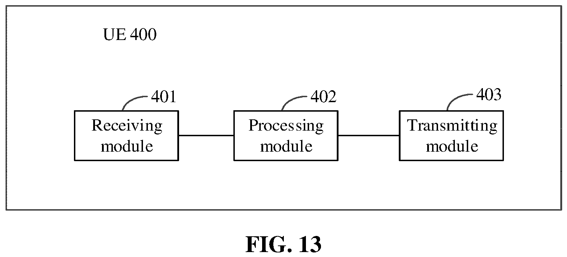

FIG. 13 is a structural diagram of a UE provided by an embodiment of the present disclosure. As shown in FIG. 13, the UE 400 of the embodiment includes a receiving module 401, a processing module 402 and a transmitting module 403.

The receiving module 401 is configured to receive a first signal from a network device. The first signal is different from a second signal from the network device in at least one of a waveform, a multiple access scheme, a modulation scheme or a coding scheme, and the first signal carries at least one type of information.

In an optional embodiment of the embodiments, a modulation scheme of the first signal includes any one of Amplitude Shift Keying (ASK) modulation, Frequency Shift Keying (FSK) modulation or Binary Phase Shift Keying (2PSK) modulation. A modulation scheme of the second signal includes any one of Orthogonal Frequency Division Multiplexing (OFDM) modulation, Quadrature Phase Shift Keying (QPSK) modulation or Quadrature Amplitude Modulation (QAM).

In an optional embodiment of the embodiments, a coding scheme of the first signal includes any one of Non-Return-to-Zero code, Manchester code, unipolar return to zero code, differential binary phase code, Miller code or differential code. A coding scheme of the second signal includes any one of Reed-Muller (RM) code, Tail-biting Convolutional Code (TBCC), Turbo code, outer code, Low Density Parity Check Code (LDPC) or Polar code.

In an optional embodiment of the embodiments, a multiple access scheme of the first signal includes any one of Frequency Division Multiple Access (FDMA), Time Division Multiple Access (TDMA) or Code Division Multiple Access (CDMA). A multiple access scheme of the second signal includes any one of Orthogonal Frequency Division Multiple Access (OFDMA) or Discrete Fourier Transform Spread Orthogonal Frequency Division Multiplexing (DFTS-OFDM).

In an optional embodiment of the embodiments, the first signal carries at least one of:
physical layer control information;
transmission indication information of a channel;
transmission indication information of a signal;
information of a Radio Resource Control (RRC) layer; or
information of a Media Access Control (MAC) layer.

In an optional embodiment of the embodiments, the physical layer control information includes at least one of:
update information of a system message, indication information of an Earthquake and Tsunami Warning System (ETWS), indication information of a Commercial Mobile Alert System (CMAS), information of stopping paging monitoring, request information of Channel State Information (CSI), CSI triggering state information, a Transmission Power Control (TPC) command of a Physical Uplink Control Channel (PUCCH) or a Physical Uplink Shared Channel (PUSCH), a TPC command of a Sounding Reference Signal (SRS), an SRS request, indication information of cancelling an uplink transmission, or non-transmission indication information of a target resource.

In an optional embodiment of the embodiments, the transmission indication information of the channel includes transmission indication information of at least one of:
a Physical Downlink Control Channel (PDCCH);
a Physical Downlink Shared Channel (PDSCH);
a Physical Uplink Control Channel (PUCCH); or
a Physical Uplink Shared Channel (PUSCH).

In an optional embodiment of the embodiments, the transmission indication information of the PDCCH includes: reception indication information of the PDCCH. The reception indication information of the PDCCH is configured to indicate the UE to detect the PDCCH on a target monitoring occasion or a monitoring occasion set.

In an optional embodiment of the embodiments, the reception indication information of the PDCCH is configured to indicate the UE to detect the PDCCH on the target monitoring occasion or the monitoring occasion set, which includes the following operation.

The reception indication information of the PDCCH is configured to indicate the UE to detect the PDCCH on a monitoring occasion or a monitoring occasion set of a target PDCCH search space.

In an optional embodiment of the embodiments, the transmission indication information of the signal includes transmission indication information of at least one of:
an aperiodic Channel State Information reference signal (CSI-RS);
a Sounding Reference Signal (SRS);
a Synchronization Signal Block (SSB);
a Tracking Reference Signal (TRS); or
a Phase Tracking Reference Signal (PTRS).

In an optional embodiment of the embodiments, first signals carrying different types of information correspond to different transmission resources.

In an optional embodiment of the embodiments, first signals carrying different types of information correspond to a same transmission resource.

In an optional embodiment of the embodiments, the first signal further includes identification information, and the identification information is configured to indicate a type of information carried by the first signal.

In an optional embodiment of the embodiments, the UE further includes the processing module 402, and the processing module 402 is configured to perform a processing procedure corresponding to the first signal.

The processing procedure includes at least one of: receiving or transmitting a channel, receiving or transmitting a signal, adjusting a power, or cancelling rate matching between uplink transmission and a downlink resource.

In an optional embodiment of the embodiments, a time interval between the receiving module 401 of the UE receiving the first signal and the processing module 402 of the UE starting to perform a processing procedure corresponding to the first signal is greater than or equal to a preset threshold.

In an optional embodiment of the embodiments, the preset threshold is determined based on at least one of:
processing capability of the UE; or
preparation time for the UE to perform the processing procedure corresponding to the first signal.

In an optional embodiment of the embodiments, the preset threshold is a threshold configured by a network or a predefined threshold.

In an optional embodiment of the embodiments, the UE further includes the transmitting module 403, and the transmitting module 403 is configured to transmit a first feedback signal to the network device. The first feedback signal carries feedback information corresponding to the at least one type of information.

In an optional embodiment of the embodiments, the first feedback signal is different from a second feedback signal transmitted by the transmitting module 403 to the network device in at least one of the waveform, the multiple access scheme, the modulation scheme or the coding scheme.

In an optional embodiment of the embodiments, a modulation scheme of the first feedback signal includes any one of Amplitude Shift Keying (ASK) modulation, Frequency Shift Keying (FSK) modulation or Binary Phase Shift Keying (2PSK) modulation. A modulation scheme of the second feedback signal includes any one of Orthogonal Frequency Division Multiplexing (OFDM) modulation, Quadrature Phase Shift Keying (QPSK) modulation or Quadrature Amplitude Modulation (QAM).

In an optional embodiment of the embodiments, a coding scheme of the first feedback signal includes any one of Non-Return-to-Zero code, Manchester code, unipolar return to zero code, differential binary phase code, Miller code or differential code. A coding scheme of the second feedback signal includes any one of Reed-Muller (RM) code, Tail-biting Convolutional Code (TBCC), Turbo code, outer code, Low Density Parity Check Code (LDPC) or Polar code.

In an optional embodiment of the embodiments, a multiple access scheme of the first feedback signal includes any one of Frequency Division Multiple Access (FDMA), Time Division Multiple Access (TDMA) or Code Division Multiple Access (CDMA). A multiple access scheme of the second feedback signal includes any one of Orthogonal Frequency Division Multiple Access (OFDMA) or Discrete Fourier Transform Spread Orthogonal Frequency Division Multiplexing (DFTS-OFDM).

The UE provided by the embodiment of the present disclosure is used for performing the technical solution of the UE in any one of the aforementioned method embodiments, and their realization principles and technical effects are similar, which would not be elaborated here.

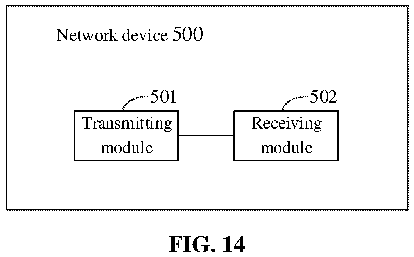

FIG. 14 is a structural diagram of a network device provided by an embodiment of the present disclosure. As shown in FIG. 14, the network device 500 of the embodiment includes a transmitting module 501 and a receiving module 502.

The transmitting module 501 is configured to transmit a first signal to a UE. The first signal is different from a second signal transmitted by the transmitting module 501 to the UE in at least one of a waveform, a multiple access scheme, a modulation scheme or a coding scheme, and the first signal carries at least one type of information.

In an optional embodiment of the embodiments, a modulation scheme of the first signal includes any one of Amplitude Shift Keying (ASK) modulation, Frequency Shift Keying (FSK) modulation or Binary Phase Shift Keying (2PSK) modulation. A modulation scheme of the second signal includes any one of Orthogonal Frequency Division Multiplexing (OFDM) modulation, Quadrature Phase Shift Keying (QPSK) modulation or Quadrature Amplitude Modulation (QAM).

In an optional embodiment of the embodiments, a coding scheme of the first signal includes any one of Non-Return-to-Zero code, Manchester code, unipolar return to zero code, differential binary phase code, Miller code or differential code. A coding scheme of the second signal includes any one of Reed-Muller (RM) code, Tail-biting Convolutional Code (TBCC), Turbo code, outer code, Low Density Parity Check Code (LDPC) or Polar code.

In an optional embodiment of the embodiments, a multiple access scheme of the first signal includes any one of Frequency Division Multiple Access (FDMA), Time Division Multiple Access (TDMA) or Code Division Multiple Access (CDMA). A multiple access scheme of the second signal includes any one of Orthogonal Frequency Division Multiple Access (OFDMA) or Discrete Fourier Transform Spread Orthogonal Frequency Division Multiplexing (DFTS-OFDM).

In an optional embodiment of the embodiments, the first signal carries at least one of:
physical layer control information;
transmission indication information of a channel;
transmission indication information of a signal;
information of a Radio Resource Control (RRC) layer; or
information of a Media Access Control (MAC) layer.

In an optional embodiment of the embodiments, the physical layer control information includes at least one of:
update information of a system message, indication information of an Earthquake and Tsunami Warning System (ETWS), indication information of a Commercial Mobile Alert System (CMAS), information of stopping paging monitoring, request information of Channel State Information (CSI), CSI triggering state information, a Transmission Power Control (TPC) command of a Physical Uplink Control Channel (PUCCH) or a Physical Uplink Shared Channel (PUSCH), a TPC command of a Sounding Reference Signal (SRS), an SRS request, indication information of cancelling an uplink transmission, or non-transmission indication information of a target resource.

In an optional embodiment of the embodiments, the transmission indication information of the channel includes transmission indication information of at least one of:
a Physical Downlink Control Channel (PDCCH);
a Physical Downlink Shared Channel (PDSCH);
a Physical Uplink Control Channel (PUCCH); or
a Physical Uplink Shared Channel (PUSCH).

In an optional embodiment of the embodiments, the transmission indication information of the PDCCH includes: reception indication information of the PDCCH. The reception indication information of the PDCCH is configured to indicate the UE to detect the PDCCH on a target monitoring occasion or a monitoring occasion set.

In an optional embodiment of the embodiments, the reception indication information of the PDCCH is configured to indicate the UE to detect the PDCCH on the target monitoring occasion or the monitoring occasion set, which includes the following operation.

The reception indication information of the PDCCH is configured to indicate the UE to detect the PDCCH on a monitoring occasion or a monitoring occasion set of a target PDCCH search space.

In an optional embodiment of the embodiments, the transmission indication information of the signal includes transmission indication information of at least one of:
an aperiodic Channel State Information reference signal (CSI-RS);
a Sounding Reference Signal (SRS);
a Synchronization Signal Block (SSB);
a Tracking Reference Signal (TRS); or
a Phase Tracking Reference Signal (PTRS).

In an optional embodiment of the embodiments, first signals carrying different types of information correspond to different transmission resources.

In an optional embodiment of the embodiments, first signals carrying different types of information correspond to a same transmission resource.

In an optional embodiment of the embodiments, the first signal further includes identification information, and the identification information is configured to indicate a type of information carried by the first signal.

In an optional embodiment of the embodiments, a time interval between transmission time of the first signal and the UE starting to perform a processing procedure corresponding to the first signal is greater than or equal to a preset threshold.

In an optional embodiment of the embodiments, the preset threshold is determined based on at least one of:
processing capability of the UE; or
preparation time for the UE to perform the processing procedure corresponding to the first signal.

In an optional embodiment of the embodiments, the preset threshold is a threshold configured by a network or a predefined threshold.

In an optional embodiment of the embodiments, the network device further includes the receiving module 502, and the receiving module 502 is configured to receive a first feedback signal from the UE. The first feedback signal carries feedback information corresponding to the at least one type of information.

In an optional embodiment of the embodiments, the first feedback signal is different from a second feedback signal received by the receiving module 502 from the UE in at least one of the waveform, the multiple access scheme, the modulation scheme or the coding scheme.

In an optional embodiment of the embodiments, a modulation scheme of the first feedback signal includes any one of Amplitude Shift Keying (ASK) modulation, Frequency Shift Keying (FSK) modulation or Binary Phase Shift Keying (2PSK) modulation. A modulation scheme of the second feedback signal includes any one of Orthogonal Frequency Division Multiplexing (OFDM) modulation, Quadrature Phase Shift Keying (QPSK) modulation or Quadrature Amplitude Modulation (QAM).

In an optional embodiment of the embodiments, a coding scheme of the first feedback signal includes any one of Non-Return-to-Zero code, Manchester code, unipolar return to zero code, differential binary phase code, Miller code or differential code. A coding scheme of the second feedback signal includes any one of Reed-Muller (RM) code, Tail-biting Convolutional Code (TBCC), Turbo code, outer code, Low Density Parity Check Code (LDPC) or Polar code.

In an optional embodiment of the embodiments, a multiple access scheme of the first feedback signal includes any one of Frequency Division Multiple Access (FDMA), Time Division Multiple Access (TDMA) or Code Division Multiple Access (CDMA). A multiple access scheme of the second feedback signal includes any one of Orthogonal Frequency Division Multiple Access (OFDMA) or Discrete Fourier Transform Spread Orthogonal Frequency Division Multiplexing (DFTS-OFDM).

The network device provided by the embodiment of the present disclosure is used for performing the technical solution of the network device in any one of the aforementioned method embodiments, and their realization principles and technical effects are similar, which would not be elaborated here.

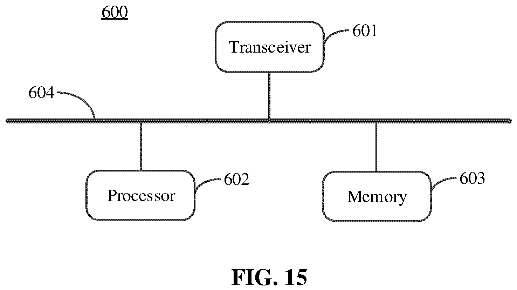

FIG. 15 is a first diagram of a hardware structure of a UE provided by an embodiment of the present disclosure. As shown in FIG. 15, the UE 600 provided by the embodiment includes: a transceiver 601, a processor 602 and a memory 603. The memory 603 is configured to store computer-executable instructions. The processor 602 is configured to execute the computer-executable instructions stored on the memory 603, so that the processor 602 performs the solution performed by the UE in any one of the foregoing method embodiments. Their realization principles and technical effects are similar, and would not be elaborated here.

Optionally, the memory 603 may be either stand-alone or integrated into the processor 602. When the memory 603 is a device independent of the processor 602, the UE 600 may further include: a bus 604 used for connecting the memory 603 and the processor 602. Optionally, the processor 602 may be a chip.

In a possible implementation, the processing module 402 in FIG. 13 may be implemented as being integrated into the processor 602, and the receiving module 401 and the transmitting module 403 in FIG. 13 may be implemented as being integrated into the transceiver 601.

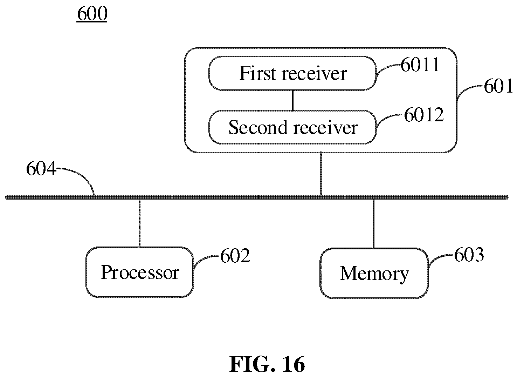

FIG. 16 is a second diagram of a hardware structure of a UE provided by an embodiment of the present disclosure. The transceiver 601 shown in FIG. 16 includes: a first receiver 6011 and a second receiver 6012. The first receiver 6011 is configured to receive a first signal from a network device, and the second receiver 6012 is configured to receive a second signal from the network device. The first signal is different from the second signal in at least one of a waveform, a multiple access scheme, a modulation scheme or a coding scheme.

It should be understood that the first receiver 6011 may be a low-power or zero-power receiver based on the wireless power supply, or may be a low-power or zero-power receiver powered by the UE. The second receiver 6012 may be an existing receiver of the UE.

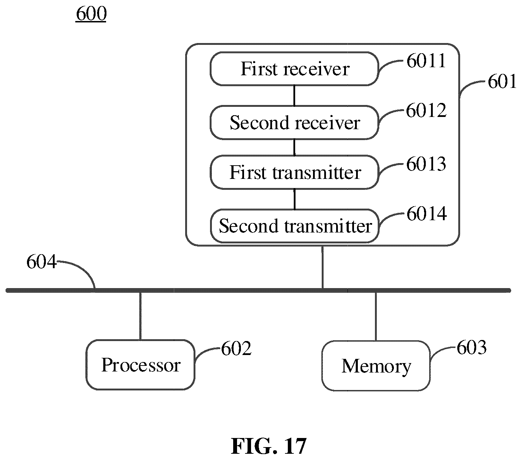

FIG. 17 is a third diagram of a hardware structure of a UE provided by an embodiment of the present disclosure. On the basis of the UE shown in FIG. 16, as shown in FIG. 17, the transceiver 601 of the UE 600 further includes: a first transmitter 6013 and a second transmitter 6014. The first transmitter 6013 is configured to transmit a first feedback signal to the network device, and the second transmitter 6014 is configured to transmit a second feedback signal to the network device. The first feedback signal is different from the second feedback signal in at least one of the waveform, the multiple access scheme, the modulation scheme or the coding scheme.

It should be understood that the first transmitter 6013 may be a low-power or zero-power transmitter based on the wireless power supply, or may be a low-power or zero-power transmitter powered by the UE. The second transmitter 6014 may be an existing transmitter of the UE.

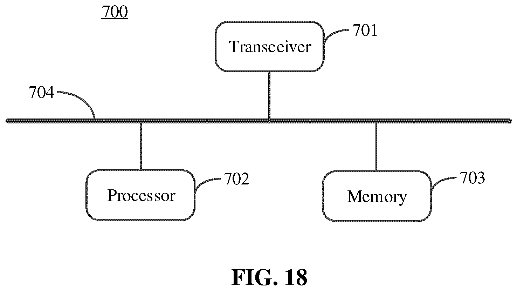

FIG. 18 is a first diagram of a hardware structure of a network device provided by an embodiment of the present disclosure. As shown in FIG. 18, the network device 700 provided by the embodiment includes: a transceiver 701, a processor 702 and a memory 703. The memory 703 is configured to store computer-executable instructions. The processor 702 is configured to execute the computer-executable instructions stored on the memory 703, so that the processor 702 performs the solution performed by the network device in any one of the foregoing method embodiments. Their realization principles and technical effects are similar, and would not be elaborated here.

Optionally, the memory 703 may be either stand-alone or integrated into the processor 702. When the memory 703 is a device independent of the processor 702, the UE 700 may further include: a bus 704 used for connecting the memory 703 and the processor 702. Optionally, the processor 702 may be a chip.

In a possible implementation, the transmitting module 501 and receiving module 502 in FIG. 14 may be implemented as being integrated into the transceiver 701.

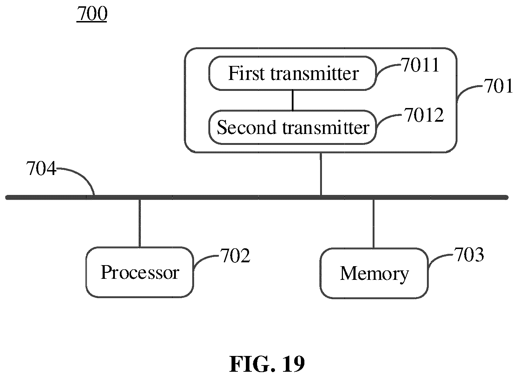

FIG. 19 is a second diagram of a hardware structure of a network device provided by an embodiment of the present disclosure. The transceiver 701 shown in FIG. 19 includes: a first transmitter 7011 and a second transmitter 7012. The first transmitter 7011 is configured to transmit a first signal to a UE and the second transmitter 7012 is configured to transmit a second signal to the UE. The first signal is different from the second signal in at least one of the waveform, the multiple access scheme, the modulation scheme or the coding scheme.

It should be understood that the first transmitter 7011 may be a low-power or zero-power transmitter based on the wireless power supply, or may be a low-power or zero-power transmitter powered by the network device. The second transmitter 7012 may be an existing transmitter of the UE.

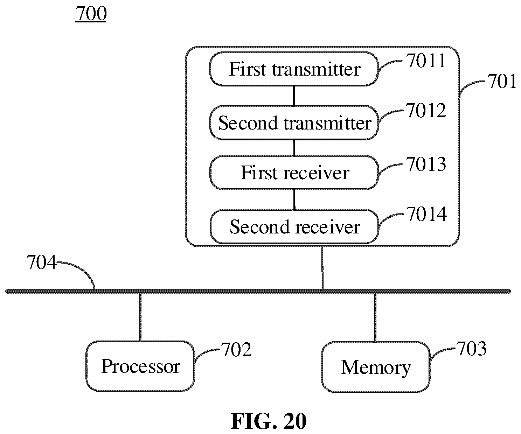

FIG. 20 is a third diagram of a hardware structure of a network device provided by an embodiment of the present disclosure. On the basis of the network device shown in FIG. 19, as shown in FIG. 20, the transceiver 701 of the network device 700 further includes: a first receiver 7013 and a second receiver 7014. The first receiver 7013 is configured to receive a first feedback signal from the UE, and the second receiver 7014 is configured to receive a second feedback signal from the UE. The first feedback signal is different from the second feedback signal in at least one of the waveform, the multiple access scheme, the modulation scheme or the coding scheme.

It should be understood that the first receiver 7013 may be a low-power or zero-power receiver based on the wireless power supply, or may be a low-power or zero-power receiver powered by the network device. The second receiver 7014 may be an existing receiver of the UE.

It should be noted that the receiver in the above embodiments may also be referred to as a receiving device, the transmitter may also be referred to as a transmitting device, and the transceiver may also be referred to as a transceiving device.

An embodiment of the present disclosure also provides a computer-readable storage medium having stored thereon computer-executable instructions. When the computer-executable instructions are executed by a processor, the technical solutions of the UE in any one of the aforementioned method embodiments are implemented.

An embodiment of the present disclosure also provides a computer-readable storage medium having stored thereon computer-executable instructions. When the computer-executable instructions are executed by a processor, the technical solutions of the network device in any one of the aforementioned method embodiments are implemented.

An embodiment of the present disclosure further provides a computer program that, when being executed by a processor, implements the technical solutions of the UE in any one of the aforementioned method embodiments.

An embodiment of the present disclosure further provides a computer program that, when being executed by a processor, implements the technical solutions of the network device in any one of the aforementioned method embodiments.

An embodiment of the present disclosure further provides a computer program product including program instructions for implementing the technical solutions of the UE in any one of the aforementioned method embodiments.

An embodiment of the present disclosure further provides a computer program product including program instructions for implementing the technical solutions of the network device in any one of the aforementioned method embodiments.

An embodiment of the present disclosure further provides a chip including a processing module and a communication interface. The processing module is configured to implement the technical solutions of the UE in any one of the aforementioned method embodiments.

Furthermore, the chip further includes a memory module (e.g., a memory) for storing instructions. The processing module is configured to execute the instructions stored in the memory module, and the execution of the instructions stored in the memory module causes the processing module to execute the technical solution of the UE in any one of the aforementioned method embodiments.

An embodiment of the present disclosure further provides a chip including a processing module and a communication interface. The processing module is configured to implement the technical solutions of the NETWORK DEVICE in any one of the aforementioned method embodiments.

Furthermore, the chip further includes a memory module (e.g., a memory) for storing instructions. The processing module is configured to execute the instructions stored in the memory module, and the execution of the instructions stored in the memory module causes the processing module to execute the technical solution of the NETWORK DEVICE in any one of the aforementioned method embodiments.

The present disclosure further provides a communication system, and the communication system may include the aforementioned UE and network device.

The terms "component" "module" "system" and the like used herein are intended to represent computer-related entities, hardware, firmware, a combination of hardware and software, software, or software in execution. For example, a component may be, but is not limited to, a process running on a processor, a processor, an object, an executable file, an executable thread, a program and/or a computer. By means of illustration, both an application running on a computing device and the computing device can be components. One or more components may reside in the process and/or the executable thread, and the components may be located on one computer and/or be distributed on two or more computers. Further, the components may be executed from various computer-readable media on which various data structures are stored. The components may perform communication via a local and/or remote process, for example, according to a signal having one or more data packets (for example, data from two components interacting with another component from a local system, a distributed system, and/or a network; for another example, an Internet interacting with other systems via a signal).

Those skilled in the art may realize that the units and algorithm operations of the embodiments described in conjunction with the disclosed embodiments can be implemented by electronic hardware, or by a combination of computer software and electronic hardware. Whether these functions are implemented by hardware or by software may depend on the specific application and design constraints of the technical solution. Those skilled may use different methods to implement the described functions according to the specific application. Such implementation however should not be deemed going beyond the scope of the technical solutions of the disclosure.

Those skilled in the art can clearly understand that for the convenience and conciseness of the description, the specific working processes of the system, device, and unit described above can refer to the corresponding processes in the aforementioned method embodiments, which would not be repeated here.

In the embodiments of the present disclosure, it should be understood that the disclosed system, device and method may be implemented in other ways. For example, the device embodiments described above are merely illustrative. For example, the partitioning of the unit is merely a partitioning of logical function. Other partitioning mode may be adopted in practical implementation. For example, multiple units or components may be combined or integrated into another system, or some features may be ignored or not executed. In addition, the coupling, the direct coupling or the communication connection illustrated or discussed may be accomplished through some interfaces, and the indirect coupling or communication connection of devices or units may be electrical, mechanical or in other forms.

The units described above as separate components may or may not be physically separate, and the components displayed as units may or may not be a physical unit, that is, they may be located in one place or distributed over multiple network units. Some or all of the units can be selected according to practical needs to achieve the purpose of the embodiment.

In addition, in the embodiments of the present disclosure, various function units may be integrated into one processing unit, or each unit may be separately used as one unit, or two or more units may be integrated into one unit.

When realized in the form of software function modules and sold or used as a stand-alone product, the functions can also be stored in a computer-readable storage medium. Based on such an understanding, the technical solutions of the embodiments of the present disclosure, or the contribution of the technical solutions to the related art, can be embodied in the form of a software product. The software product can be stored in a storage medium, and may include multiple instructions to cause a computer device (which may be a personal computer, a server, a network device, etc.) to perform all or part of the methods described in the embodiments of the present disclosure. The storage medium may include various media that may store program codes, such as a U disk, a mobile hard disk, a Read-Only Memory (ROM), a Random Access Memory (RAM), a magnetic disk, an optical disc, etc.

Terms used in the embodiments of the present disclosure are used only for the explanation of specific embodiments of the present disclosure, and are not intended to limit the present disclosure.

It is to be understood that various numerical numbers referred to in the embodiments of the present disclosure are only for the convenience of description, and are not intended to limit the scope of the embodiments of the present disclosure.

It can be understood that in the embodiments of the present disclosure, a size of a sequence number of the above-mentioned processes does not mean an order of the execution. The execution order of various processes should be determined according to the function and inherent logic, and should not constitute any limitation on the implementation process of the embodiments of the present disclosure.

The foregoing are only specific embodiments of the disclosure, however, the scope of protection of the disclosure is not limited thereto. Variation and substitution which may be readily conceived by those skilled in the art within the technical scope disclosed in the disclosure should fall within the scope of protection of the disclosure. Therefore, the scope of protection of the disclosure should conform to the scope of protection of the claims.

## Claims

1. An information acquisition method, comprising:
receiving, by a User Equipment (UE), a first signal from a network device, wherein the first signal is different from a second signal from the network device in at least one of a waveform, a multiple access scheme, a modulation scheme or a coding scheme, and the first signal carries at least one type of information.

2. The method of claim 1, wherein a modulation scheme of the first signal comprises any one of Amplitude Shift Keying (ASK) modulation, Frequency Shift Keying (FSK) modulation or Binary Phase Shift Keying (2PSK) modulation, and a modulation scheme of the second signal comprises any one of Orthogonal Frequency Division Multiplexing (OFDM) modulation, Quadrature Phase Shift Keying (QPSK) modulation or Quadrature Amplitude Modulation (QAM).

3. The method of claim 1 or 2, wherein a coding scheme of the first signal comprises any one of Non-Return-to-Zero code, Manchester code, unipolar return to zero code, differential binary phase code, Miller code or differential code, and a coding scheme of the second signal comprises any one of Reed-Muller (RM) code, Tail-biting Convolutional Code (TBCC), Turbo code, outer code, Low Density Parity Check Code (LDPC) or Polar code.

4. The method of any one of claims 1 to 3, wherein a multiple access scheme of the first signal comprises any one of Frequency Division Multiple Access (FDMA), Time Division Multiple Access (TDMA) or Code Division Multiple Access (CDMA), and a multiple access scheme of the second signal comprises any one of Orthogonal Frequency Division Multiple Access (OFDMA) or Discrete Fourier Transform Spread Orthogonal Frequency Division Multiplexing (DFTS-OFDM).

5. The method of any one of claims 1 to 4, wherein the first signal carries at least one of: physical layer control information, transmission indication information of a channel, transmission indication information of a signal, information of a Radio Resource Control (RRC) layer or information of a Media Access Control (MAC) layer.

6. The method of claim 5, wherein the physical layer control information comprises at least one of: update information of a system message, indication information of an Earthquake and Tsunami Warning System (ETWS), indication information of a Commercial Mobile Alert System (CMAS), information of stopping paging monitoring, request information of Channel State Information (CSI), CSI triggering state information, a Transmission Power Control (TPC) command of a Physical Uplink Control Channel (PUCCH) or a Physical Uplink Shared Channel (PUSCH), a TPC command of a Sounding Reference Signal (SRS), an SRS request, indication information of cancelling an uplink transmission, or non-transmission indication information of a target resource.

7. The method of claim 5, wherein the transmission indication information of the channel comprises transmission indication information of at least one of: a Physical Downlink Control Channel (PDCCH), a Physical Downlink Shared Channel (PDSCH), a Physical Uplink Control Channel (PUCCH), or a Physical Uplink Shared Channel (PUSCH).

8. The method of claim 7, wherein the transmission indication information of the PDCCH comprises: reception indication information of the PDCCH, the reception indication information of the PDCCH being configured to indicate the UE to detect the PDCCH on a target monitoring occasion or a monitoring occasion set.

9. The method of claim 8, wherein the reception indication information of the PDCCH being configured to indicate the UE to detect the PDCCH on the target monitoring occasion or the monitoring occasion set comprises:
the reception indication information of the PDCCH being configured to indicate the UE to detect the PDCCH on a monitoring occasion or a monitoring occasion set of a target PDCCH search space.

10. The method of claim 5, wherein the transmission indication information of the signal comprises transmission indication information of at least one of: an aperiodic Channel State Information reference signal (CSI-RS), a Sounding Reference Signal (SRS), a Synchronization Signal Block (SSB), a Tracking Reference Signal (TRS) or a Phase Tracking Reference Signal (PTRS).

11. The method of any one of claims 1 to 10, wherein first signals carrying different types of information correspond to different transmission resources.

12. The method of any one of claims 1 to 10, wherein first signals carrying different types of information correspond to a same transmission resource.

13. The method of claim 12, wherein the first signal further comprises identification information, and the identification information is configured to indicate a type of information carried by the first signal.

14. The method of any one of claims 1 to 13, further comprising:
performing, by the UE, a processing procedure corresponding to the first signal,
wherein the processing procedure comprises at least one of: receiving or transmitting a channel, receiving or transmitting a signal, adjusting a power, or cancelling rate matching between uplink transmission and a downlink resource.

15. The method of any one of claims 1 to 14, wherein a time interval between the UE receiving the first signal and the UE starting to perform a processing procedure corresponding to the first signal is greater than or equal to a preset threshold.

16. The method of claim 15, wherein the preset threshold is determined based on at least one of:
processing capability of the UE, or
preparation time for the UE to perform the processing procedure corresponding to the first signal.

17. The method of claim 15 or 16, wherein the preset threshold is a threshold configured by a network or a predefined threshold.

18. The method of any one of claims 1 to 17, further comprising:
transmitting, by the UE, a first feedback signal to the network device, wherein the first feedback signal carries feedback information corresponding to the at least one type of information.

19. The method of claim 18, wherein the first feedback signal is different from a second feedback signal transmitted by the UE to the network device in at least one of the waveform, the multiple access scheme, the modulation scheme or the coding scheme.

20. The method of claim 19, wherein a modulation scheme of the first feedback signal comprises any one of Amplitude Shift Keying (ASK) modulation, Frequency Shift Keying (FSK) modulation or Binary Phase Shift Keying (2PSK) modulation, and a modulation scheme of the second feedback signal comprises any one of Orthogonal Frequency Division Multiplexing (OFDM) modulation, Quadrature Phase Shift Keying (QPSK) modulation or Quadrature Amplitude Modulation (QAM).

21. The method of claim 19 or 20, wherein a coding scheme of the first feedback signal comprises any one of Non-Return-to-Zero code, Manchester code, unipolar return to zero code, differential binary phase code, Miller code or differential code, and a coding scheme of the second feedback signal comprises any one of Reed-Muller (RM) code, Tail-biting Convolutional Code (TBCC), Turbo code, outer code, Low Density Parity Check Code (LDPC) or Polar code.

22. The method of any one of claims 19 to 21, wherein a multiple access scheme of the first feedback signal comprises any one of Frequency Division Multiple Access (FDMA), Time Division Multiple Access (TDMA) or Code Division Multiple Access (CDMA), and a multiple access scheme of the second feedback signal comprises any one of Orthogonal Frequency Division Multiple Access (OFDMA) or Discrete Fourier Transform Spread Orthogonal Frequency Division Multiplexing (DFTS-OFDM).

23. An information acquisition method, comprising:
transmitting, by a network device, a first signal to a User Equipment (UE), wherein the first signal is different from a second signal transmitted by the network device to the UE in at least one of a waveform, a multiple access scheme, a modulation scheme or a coding scheme, and the first signal carries at least one type of information.

24. The method of claim 23, wherein a modulation scheme of the first signal comprises any one of Amplitude Shift Keying (ASK) modulation, Frequency Shift Keying (FSK) modulation or Binary Phase Shift Keying (2PSK) modulation, and a modulation scheme of the second signal comprises any one of Orthogonal Frequency Division Multiplexing (OFDM) modulation, Quadrature Phase Shift Keying (QPSK) modulation or Quadrature Amplitude Modulation (QAM).

25. The method of claim 23 or 24, wherein a coding scheme of the first signal comprises any one of Non-Return-to-Zero code, Manchester code, unipolar return to zero code, differential binary phase code, Miller code or differential code, and a coding scheme of the second signal comprises any one of Reed-Muller (RM) code, Tail-biting Convolutional Code (TBCC), Turbo code, outer code, Low Density Parity Check Code (LDPC) or Polar code.

26. The method of any one of claims 23 to 25, wherein a multiple access scheme of the first signal comprises any one of Frequency Division Multiple Access (FDMA), Time Division Multiple Access (TDMA) or Code Division Multiple Access (CDMA), and a multiple access scheme of the second signal comprises any one of Orthogonal Frequency Division Multiple Access (OFDMA) or Discrete Fourier Transform Spread Orthogonal Frequency Division Multiplexing (DFTS-OFDM).

27. The method of any one of claims 23 to 26, wherein the first signal carries at least one of: physical layer control information, transmission indication information of a channel, transmission indication information of a signal, information of a Radio Resource Control (RRC) layer or information of a Media Access Control (MAC) layer.

28. The method of claim 27, wherein the physical layer control information comprises at least one of: update information of a system message, indication information of an Earthquake and Tsunami Warning System (ETWS), indication information of a Commercial Mobile Alert System (CMAS), information of stopping paging monitoring, request information of Channel State Information (CSI), CSI triggering state information, a Transmission Power Control (TPC) command of a Physical Uplink Control Channel (PUCCH) or a Physical Uplink Shared Channel (PUSCH), a TPC command of a Sounding Reference Signal (SRS), an SRS request, indication information of cancelling an uplink transmission, or non-transmission indication information of a target resource.

29. The method of claim 27, wherein the transmission indication information of the channel comprises transmission indication information of at least one of: a Physical Downlink Control Channel (PDCCH), a Physical Downlink Shared Channel (PDSCH), a Physical Uplink Control Channel (PUCCH), or a Physical Uplink Shared Channel (PUSCH).

30. The method of claim 29, wherein the transmission indication information of the PDCCH comprises: reception indication information of the PDCCH, the reception indication information of the PDCCH being configured to indicate the UE to detect the PDCCH on a target monitoring occasion or a monitoring occasion set.

31. The method of claim 30, wherein the reception indication information of the PDCCH being configured to indicate the UE to detect the PDCCH on the target monitoring occasion or the monitoring occasion set comprises:
the reception indication information of the PDCCH being configured to indicate the UE to detect the PDCCH on a monitoring occasion or a monitoring occasion set of a target PDCCH search space.

32. The method of claim 27, wherein the transmission indication information of the signal comprises transmission indication information of at least one of: an aperiodic Channel State Information reference signal (CSI-RS), a Sounding Reference Signal (SRS), a Synchronization Signal Block (SSB), a Tracking Reference Signal (TRS) or a phase Tracking Reference Signal (PTRS).

33. The method of any one of claims 23 to 32, wherein first signals carrying different types of information correspond to different transmission resources.

34. The method of any one of claims 23 to 32, wherein first signals carrying different types of information correspond to a same transmission resource.

35. The method of claim 34, wherein the first signal further comprises identification information, and the identification information is configured to indicate a type of information carried by the first signal.

36. The method of any one of claims 23 to 35, wherein a time interval between transmission time of the first signal and the UE starting to perform a processing procedure corresponding to the first signal is greater than or equal to a preset threshold.

37. The method of claim 36, wherein the preset threshold is determined based on at least one of:
processing capability of the UE, or
preparation time for the UE to perform the processing procedure corresponding to the first signal.

38. The method of claim 36 or 37, wherein the preset threshold is a threshold configured by a network or a predefined threshold.

39. The method of any one of claims 23 to 38, further comprising:
receiving, by the network device, a first feedback signal from the UE, wherein the first feedback signal carries feedback information corresponding to the at least one type of information.

40. The method of claim 39, wherein the first feedback signal is different from a second feedback signal received by the network device from the UE in at least one of the waveform, the multiple access scheme, the modulation scheme or the coding scheme.

41. The method of claim 40, wherein a modulation scheme of the first feedback signal comprises any one of Amplitude Shift Keying (ASK) modulation, Frequency Shift Keying (FSK) modulation or Binary Phase Shift Keying (2PSK) modulation, and a modulation scheme of the second feedback signal comprises any one of Orthogonal Frequency Division Multiplexing (OFDM) modulation, Quadrature Phase Shift Keying (QPSK) modulation or Quadrature Amplitude Modulation (QAM).

42. The method of claim 40 or 41, wherein a coding scheme of the first feedback signal comprises any one of Non-Return-to-Zero code, Manchester code, unipolar return to zero code, differential binary phase code, Miller code or differential code, and a coding scheme of the second feedback signal comprises any one of Reed-Muller (RM) code, Tail-biting Convolutional Code (TBCC), Turbo code, outer code, Low Density Parity Check Code (LDPC) or Polar code.

43. The method of any one of claims 40 to 42, wherein a multiple access scheme of the first feedback signal comprises any one of Frequency Division Multiple Access (FDMA), Time Division Multiple Access (TDMA) or Code Division Multiple Access (CDMA), and a multiple access scheme of the second feedback signal comprises any one of Orthogonal Frequency Division Multiple Access (OFDMA) or Discrete Fourier Transform Spread Orthogonal Frequency Division Multiplexing (DFTS-OFDM).

44. A User Equipment (UE), comprising:
a receiving module, configured to receive a first signal from a network device, wherein the first signal is different from a second signal from the network device in at least one of a waveform, a multiple access scheme, a modulation scheme or a coding scheme, and the first signal carries at least one type of information.

45. The UE of claim 44, wherein a modulation scheme of the first signal comprises any one of Amplitude Shift Keying (ASK) modulation, Frequency Shift Keying (FSK) modulation or Binary Phase Shift Keying (2PSK) modulation, and a modulation scheme of the second signal comprises any one of Orthogonal Frequency Division Multiplexing (OFDM) modulation, Quadrature Phase Shift Keying (QPSK) modulation or Quadrature Amplitude Modulation (QAM).

46. The UE of claim 44 or 45, wherein a coding scheme of the first signal comprises any one of Non-Return-to-Zero code, Manchester code, unipolar return to zero code, differential binary phase code, Miller code or differential code, and a coding scheme of the second signal comprises any one of Reed-Muller (RM) code, Tail-biting Convolutional Code (TBCC), Turbo code, outer code, Low Density Parity Check Code (LDPC) or Polar code.

47. The UE of any one of claims 44 to 46, wherein a multiple access scheme of the first signal comprises any one of Frequency Division Multiple Access (FDMA), Time Division Multiple Access (TDMA) or Code Division Multiple Access (CDMA), and a multiple access scheme of the second signal comprises any one of Orthogonal Frequency Division Multiple Access (OFDMA) or Discrete Fourier Transform Spread Orthogonal Frequency Division Multiplexing (DFTS-OFDM).

48. The UE of any one of claims 44 to 47, wherein the first signal carries at least one of: physical layer control information, transmission indication information of a channel, transmission indication information of a signal, information of a Radio Resource Control (RRC) layer or information of a Media Access Control (MAC) layer.

49. The UE of claim 48, wherein the physical layer control information comprises at least one of: update information of a system message, indication information of an Earthquake and Tsunami Warning System (ETWS), indication information of a Commercial Mobile Alert System (CMAS), information of stopping paging monitoring, request information of Channel State Information (CSI), CSI triggering state information, a Transmission Power Control (TPC) command of a Physical Uplink Control Channel (PUCCH) or a Physical Uplink Shared Channel (PUSCH), a TPC command of a Sounding Reference Signal (SRS), an SRS request, indication information of cancelling an uplink transmission, or non-transmission indication information of a target resource.

50. The UE of claim 48, wherein the transmission indication information of the channel comprises transmission indication information of at least one of: a Physical Downlink Control Channel (PDCCH), a Physical Downlink Shared Channel (PDSCH), a Physical Uplink Control Channel (PUCCH), or a Physical Uplink Shared Channel (PUSCH).

51. The UE of claim 50, wherein the transmission indication information of the PDCCH comprises: reception indication information of the PDCCH, the reception indication information of the PDCCH being configured to indicate the UE to detect the PDCCH on a target monitoring occasion or a monitoring occasion set.

52. The UE of claim 51, wherein the reception indication information of the PDCCH being configured to indicate the UE to detect the PDCCH on the target monitoring occasion or the monitoring occasion set comprises:
the reception indication information of the PDCCH being configured to indicate the UE to detect the PDCCH on a monitoring occasion or a monitoring occasion set of a target PDCCH search space.

53. The UE of claim 48, wherein the transmission indication information of the signal comprises transmission indication information of at least one of: an aperiodic Channel State Information reference signal (CSI-RS), a Sounding Reference Signal (SRS), a Synchronization Signal Block (SSB), a Tracking Reference Signal (TRS) or a phase Tracking Reference Signal (PTRS).

54. The UE of any one of claims 44 to 53, wherein first signals carrying different types of information correspond to different transmission resources.

55. The UE of any one of claims 44 to 53, wherein first signals carrying different types of information correspond to a same transmission resource.

56. The UE of claim 55, wherein the first signal further comprises identification information, and the identification information is configured to indicate a type of information carried by the first signal.

57. The UE of any one of claims 44 to 56, further comprising:
a processing module, configured to perform a processing procedure corresponding to the first signal,
wherein the processing procedure comprises at least one of: receiving or transmitting a channel, receiving or transmitting a signal, adjusting a power, or cancelling rate matching between uplink transmission and a downlink resource.

58. The UE of any one of claims 44 to 57, wherein a time interval between the receiving module of UE receiving the first signal and the processing module of the UE starting to perform a processing procedure corresponding to the first signal is greater than or equal to a preset threshold.

59. The UE of claim 58, wherein the preset threshold is determined based on at least one of: processing capability of the UE, or preparation time for the UE to perform the processing procedure corresponding to the first signal.

60. The UE of claim 58 or 59, wherein the preset threshold is a threshold configured by a network or a predefined threshold.

61. The UE of any one of claims 44 to 60, further comprising: a transmitting module, configured to transmit a first feedback signal to the network device, wherein the first feedback signal carries feedback information corresponding to the at least one type of information.

62. The UE of claim 61, wherein the first feedback signal is different from a second feedback signal transmitted by the transmitting module to the network device in at least one of the waveform, the multiple access scheme, the modulation scheme or the coding scheme.

63. The UE of claim 62, wherein a modulation scheme of the first feedback signal comprises any one of Amplitude Shift Keying (ASK) modulation, Frequency Shift Keying (FSK) modulation or Binary Phase Shift Keying (2PSK) modulation, and a modulation scheme of the second feedback signal comprises any one of Orthogonal Frequency Division Multiplexing (OFDM) modulation, Quadrature Phase Shift Keying (QPSK) modulation or Quadrature Amplitude Modulation (QAM).

64. The UE of claim 62 or 63, wherein a coding scheme of the first feedback signal comprises any one of Non-Return-to-Zero code, Manchester code, unipolar return to zero code, differential binary phase code, Miller code or differential code, and a coding scheme of the second feedback signal comprises any one of Reed-Muller (RM) code, Tail-biting Convolutional Code (TBCC), Turbo code, outer code, Low Density Parity Check Code (LDPC) or Polar code.

65. The UE of any one of claims 62 to 64, wherein a multiple access scheme of the first feedback signal comprises any one of Frequency Division Multiple Access (FDMA), Time Division Multiple Access (TDMA) or Code Division Multiple Access (CDMA), and a multiple access scheme of the second feedback signal comprises any one of Orthogonal Frequency Division Multiple Access (OFDMA) or Discrete Fourier Transform Spread Orthogonal Frequency Division Multiplexing (DFTS-OFDM).

66. A network device, comprising:
a transmitting module, configured to transmit a first signal to a User Equipment (UE), wherein the first signal is different from a second signal transmitted by the transmitting module to the UE in at least one of a waveform, a multiple access scheme, a modulation scheme or a coding scheme, and the first signal carries at least one type of information.

67. The network device of claim 66, wherein a modulation scheme of the first signal comprises any one of Amplitude Shift Keying (ASK) modulation, Frequency Shift Keying (FSK) modulation or Binary Phase Shift Keying (2PSK) modulation, and a modulation scheme of the second signal comprises any one of Orthogonal Frequency Division Multiplexing (OFDM) modulation, Quadrature Phase Shift Keying (QPSK) modulation or Quadrature Amplitude Modulation (QAM).

68. The network device of claim 66 or 67, wherein a coding scheme of the first signal comprises any one of Non-Return-to-Zero code, Manchester code, unipolar return to zero code, differential binary phase code, Miller code or differential code, and a coding scheme of the second signal comprises any one of Reed-Muller (RM) code, Tail-biting Convolutional Code (TBCC), Turbo code, outer code, Low Density Parity Check Code (LDPC) or Polar code.

69. The network device of any one of claims 66 to 68, wherein a multiple access scheme of the first signal comprises any one of Frequency Division Multiple Access (FDMA), Time Division Multiple Access (TDMA) or Code Division Multiple Access (CDMA), and a multiple access scheme of the second signal comprises any one of Orthogonal Frequency Division Multiple Access (OFDMA) or Discrete Fourier Transform Spread Orthogonal Frequency Division Multiplexing (DFTS-OFDM).

70. The network device of any one of claims 66 to 69, wherein the first signal carries at least one of: physical layer control information, transmission indication information of a channel, transmission indication information of a signal, information of a Radio Resource Control (RRC) layer or information of a Media Access Control (MAC) layer.

71. The network device of claim 70, wherein the physical layer control information comprises at least one of: update information of a system message, indication information of an Earthquake and Tsunami Warning System (ETWS), indication information of a Commercial Mobile Alert System (CMAS), information of stopping paging monitoring, request information of Channel State Information (CSI), CSI triggering state information, a Transmission Power Control (TPC) command of a Physical Uplink Control Channel (PUCCH) or a Physical Uplink Shared Channel (PUSCH), a TPC command of a Sounding Reference Signal (SRS), an SRS request, indication information of cancelling an uplink transmission, or non-transmission indication information of a target resource.

72. The network device of claim 70, wherein the transmission indication information of the channel comprises transmission indication information of at least one of: a Physical Downlink Control Channel (PDCCH), a Physical Downlink Shared Channel (PDSCH), a Physical Uplink Control Channel (PUCCH), or a Physical Uplink Shared Channel (PUSCH).

73. The network device of claim 72, wherein the transmission indication information of the PDCCH comprises: reception indication information of the PDCCH, the reception indication information of the PDCCH being configured to indicate the UE to detect the PDCCH on a target monitoring occasion or a monitoring occasion set.

74. The network device of claim 73, wherein the reception indication information of the PDCCH being configured to indicate the UE to detect the PDCCH on the target monitoring occasion or the monitoring occasion set comprises:
the reception indication information of the PDCCH being configured to indicate the UE to detect the PDCCH on a monitoring occasion or a monitoring occasion set of a target PDCCH search space.

75. The network device of claim 70, wherein the transmission indication information of the signal comprises transmission indication information of at least one of: an aperiodic Channel State Information reference signal (CSI-RS), a Sounding Reference Signal (SRS), a Synchronization Signal Block (SSB), a Tracking Reference Signal (TRS) or a phase Tracking Reference Signal (PTRS).

76. The network device of any one of claims 66 to 75, wherein first signals carrying different types of information correspond to different transmission resources.

77. The network device of any one of claims 66 to 75, wherein first signals carrying different types of information correspond to a same transmission resource.

78. The method of claim 77, wherein the first signal further comprises identification information, and the identification information is configured to indicate a type of information carried by the first signal.

79. The network device of any one of claims 66 to 78, wherein a time interval between transmission time of the first signal and the UE starting to perform a processing procedure corresponding to the first signal is greater than or equal to a preset threshold.

80. The network device of claim 79, wherein the preset threshold is determined based on at least one of processing capability of the UE, or preparation time for the UE to perform the processing procedure corresponding to the first signal.

81. The network device of claim 79 or 80, wherein the preset threshold is a threshold configured by a network or a predefined threshold.

82. The network device of any one of claims 66 to 81, further comprising: a receiving module, configured to receive a first feedback signal from the UE, wherein the first feedback signal carries feedback information corresponding to the at least one type of information.

83. The network device of claim 82, wherein the first feedback signal is different from a second feedback signal received by the receiving module from the UE in at least one of the waveform, the multiple access scheme, the modulation scheme or the coding scheme.

84. The network device of claim 83, wherein a modulation scheme of the first feedback signal comprises any one of Amplitude Shift Keying (ASK) modulation, Frequency Shift Keying (FSK) modulation or Binary Phase Shift Keying (2PSK) modulation, and a modulation scheme of the second feedback signal comprises any one of Orthogonal Frequency Division Multiplexing (OFDM) modulation, Quadrature Phase Shift Keying (QPSK) modulation or Quadrature Amplitude Modulation (QAM).

85. The network device of claim 83 or 84, wherein a coding scheme of the first feedback signal comprises any one of Non-Return-to-Zero code, Manchester code, unipolar return to zero code, differential binary phase code, Miller code or differential code, and a coding scheme of the second feedback signal comprises any one of Reed-Muller (RM) code, Tail-biting Convolutional Code (TBCC), Turbo code, outer code, Low Density Parity Check Code (LDPC) or Polar code.

86. The network device of any one of claims 83 to 85, wherein a multiple access scheme of the first feedback signal comprises any one of Frequency Division Multiple Access (FDMA), Time Division Multiple Access (TDMA) or Code Division Multiple Access (CDMA), and a multiple access scheme of the second feedback signal comprises any one of Orthogonal Frequency Division Multiple Access (OFDMA) or Discrete Fourier Transform Spread Orthogonal Frequency Division Multiplexing (DFTS-OFDM).

87. A User Equipment (UE), comprising:
a transceiver, a processor and a memory,
wherein the memory is configured to store computer-executable instructions, and
the processor is configured to execute the computer-executable instructions stored on the memory to perform the method of any one of claims 1 to 22.

88. The UE of claim 87, wherein the transceiver comprises a first receiver and a second receiver, the first receiver is configured to receive a first signal from a network device, the second receiver is configured to receive a second signal from the network device, and the first signal is different from the second signal in at least one of a waveform, a multiple access scheme, a modulation scheme or a coding scheme.

89. The method of claim 87 or 88, wherein the transceiver comprises a first transmitter and a second transmitter, the first transmitter is configured to transmit a first feedback signal to a network device, the second transmitter is configured to transmit a second feedback signal to the network device, and the first feedback signal is different from the second feedback signal in at least one of the waveform, the multiple access scheme, the modulation scheme or the coding scheme.

90. A network device, comprising:
a transceiver, a processor and a memory,
wherein the memory is configured to store computer-executable instructions, and
the processor is configured to execute the computer-executable instructions stored on the memory to perform the method of any one of claims 23 to 43.

91. The method of claim 90, wherein the transceiver comprises a first transmitter and a second transmitter, the first transmitter is configured to transmit a first signal to a User Equipment (UE), the second transmitter is configured to transmit a second signal to the UE, and the first signal is different from the second signal in at least one of a waveform, a multiple access scheme, a modulation scheme or a coding scheme.

92. The method of claim 90 or 91, wherein the transceiver comprises a first receiver and a second receiver, the first receiver is configured to receive a first feedback signal from a User Equipment (UE), the second receiver is configured to receive a second feedback signal from the UE, and the first feedback signal is different from the second feedback signal in at least one of the waveform, the multiple access scheme, the modulation scheme or the coding scheme.

93. A computer storage medium, configured to store a computer program that, when running on a computer, causes the computer to perform the method of any one of claims 1 to 22, or the method of any one of claims 23 to 43.

94. A computer program product, wherein the computer program product, when running on a computer, causes the computer to perform the method of any one of claims 1 to 22, or the method of any one of claims 23 to 43.
